# EUROPEAN PATENT APPLICATION

(11) **EP 4 322 426 A1**
(43) Date of publication of application: **14.02.2024**
(21) Application number: 22784351.3
(22) Date of filing: 17.02.2022
(51) Int. Cl.: H04B 10/2507, H04J 14/02

(54) **OPTICAL TRANSMISSION SYSTEM, OPTICAL TRANSMISSION PATH, AND OPTICAL-ELECTRICAL COMPOSITE CABLE**

(30) Priority: 07.04.2021 JP 2021065497
(71) Applicant: Koike, Yasuhiro, Kanagawa 225-0012 (JP)
(72) Inventor: MURAMOTO, Kenta, Yokohama-shi, Kanagawa 231-0023 (JP); KOIKE, Yasuhiro, Yokohama-shi, Kanagawa 225-0012 (JP)
(74) Representative: Hoffmann Eitle
(86) International application number: PCT/JP2022/006478
(87) International publication number: WO 2022/215366

(57) **Abstract**

An optical transmission system includes an optical signal transmitter that transmits an optical signal output from a light source, an optical signal receiver that receives the optical signal, and an optical transmission path that optically connects the optical signal transmitter and the optical signal receiver and transmits the optical signal, wherein a first optical transmission path is disposed immediately after the light source and further, optically connected to a second optical transmission path, the first optical transmission path having a product of a scattering loss with respect to the optical signal and a length of 6 dB or less, and when a Gaussian beam emitted from a single-mode optical fiber is input by center excitation, the first optical transmission path outputting the Gaussian beam with a beam diameter being enlarged by three times or more.

## Description

### Field

The present invention relates to an optical transmission system, an optical transmission path, and a photoelectric composite cable.

### Background

In recent years, in applications of indoor communication such as a data center, it is required to perform short-range communication of about 100 m. In addition, for large-capacity communication, multi-level modulation methods such as pulse-amplitude modulation (PAM) have been studied.

When the multi-level modulation method is adopted, since a difference in amplitude level between symbols is small, lower-noise characteristics are required in order to reduce the error rate and improve the quality of communication.

As a technology for reducing the error rate, an error correction method called forward error correction (FEC) is known. The FEC is realized by using a processor such as a digital signal processor (DSP).

### Citation List

### Patent Literature

Patent Literature 1: Japanese Laid-open Patent Publication No. 2000-151516

### Summary

### Technical Problem

When a correction method such as FEC for reducing the error rate is used, it is necessary to assign a code for error correction, which increases the data amount and causes problems such a transmission delay, deterioration of coding efficiency, and the like. In addition, complication of a configuration due to addition of a processor, heat generation due to a load of the processor, an increase in power consumption, and the like become problems.

The present invention has been made in view of the above, and an object of the present invention is to provide an optical transmission system, an optical transmission path, and a photoelectric composite cable capable of realizing high-quality and large-capacity communication with a simple configuration.

### Solution to Problem

To resolve the problem and attain the object, according to an embodiment of the present invention, an optical transmission system includes: an optical signal transmitter that transmits an optical signal output from a light source; an optical signal receiver that receives the optical signal; and an optical transmission path that optically connects the optical signal transmitter and the optical signal receiver and transmits the optical signal. Further, a first optical transmission path is disposed immediately after the light source and further, optically connected to a second optical transmission path, the first optical transmission path having a product of a scattering loss with respect to the optical signal and a length of 6 dB or less, and when a Gaussian beam emitted from a single-mode optical fiber is input by center excitation, the first optical transmission path outputting the Gaussian beam with a beam diameter being enlarged by three times or more.

According to an embodiment of the present invention, an optical transmission system includes: an optical signal transmitter that transmits an optical signal output from a light source; an optical signal receiver that receives the optical signal; and an optical transmission path that optically connects the optical signal transmitter and the optical signal receiver and transmits the optical signal. Further, a first optical transmission path is disposed immediately after the light source and further, optically connected to a second optical transmission path longer than the first optical transmission path, the first optical transmission path having a product of a scattering loss with respect to the optical signal and a length of 6 dB or less, and when a Gaussian beam emitted from a single-mode optical fiber is input by center excitation, the first optical transmission path outputting the Gaussian beam with a beam diameter being enlarged by three times or more.

According to an embodiment of the present invention, an optical transmission system includes: an optical signal transmitter that outputs an optical signal; an optical signal receiver that receives the optical signal; and an optical transmission path that optically connects the optical signal transmitter and the optical signal receiver and transmits the optical signal. Further, the optical transmission path includes: a first optical transmission path that has a product of a scattering loss with respect to the optical signal and a length of 6 dB or less and outputs a Gaussian beam with a beam diameter being enlarged by three times or more when the Gaussian beam emitted from a single-mode optical fiber is input by center excitation; and a second optical transmission path that is optically connected to the first optical transmission path, is longer than the first optical transmission path, has a transmission loss of 100 dB/km or less with respect to the optical signal, and outputs a Gaussian beam with a beam diameter being enlarged by less than three times when the Gaussian beam emitted from a single-mode optical fiber is input by center excitation.

According to an embodiment of the present invention, an optical transmission system includes: an optical signal transmitter that outputs an optical signal; an optical signal receiver that receives the optical signal; and an optical transmission path that optically connects the optical signal transmitter and the optical signal receiver and transmits the optical signal. Further, the optical transmission path has a product of a scattering loss with respect to the optical signal and a length of 6 dB or less and outputs a Gaussian beam with a beam diameter being enlarged by three times or more when the Gaussian beam is emitted from a single-mode optical fiber and input by center excitation, a modulation method of the optical signal is a multi-level modulation method, and an error rate of 10⁻¹² or less is realized without using an error correction method.

According to an embodiment of the present invention, an optical transmission system includes: an optical signal transmitter that outputs an optical signal; an optical signal receiver that receives the optical signal; and an optical transmission path that optically connects the optical signal transmitter and the optical signal receiver and transmits the optical signal. Further, in the optical transmission path, a ratio of a minimum value to a maximum value of a beam diameter of a beam to be output is 0.7 or more when a Gaussian beam emitted from a single-mode optical fiber is input with a position of the Gaussian beam being shifted.

According to an embodiment of the present invention, an optical transmission system includes: an optical signal transmitter that transmits an optical signal output from a light source; an optical signal receiver that receives the optical signal; and an optical transmission path that optically connects the optical signal transmitter and the optical signal receiver and transmits the optical signal. Further, the optical transmission path is configured by connecting two or more optical transmission paths, the optical transmission paths are connected to each other via an air layer in at least one of connection points, and when a Gaussian beam emitted from a single-mode optical fiber is input by center excitation, at least an optical transmission path disposed immediately after the light source among the optical transmission paths to be connected outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less.

According to an embodiment of the present invention, an optical transmission system includes: an optical signal transmitter that outputs an optical signal; an optical signal receiver that receives the optical signal; and an optical transmission path that optically connects the optical signal transmitter and the optical signal receiver and transmits the optical signal. Further, the optical transmission path is configured by connecting two or more optical transmission paths, the optical transmission paths are connected to each other via an air layer in at least one of connection points, and when a Gaussian beam emitted from a single-mode optical fiber is input by center excitation, each optical transmission path outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less.

According to an embodiment of the present invention, a photoelectric composite cable including the optical transmission system.

According to an embodiment of the present invention, an optical transmission path used for an optical signal transmitter that outputs an optical signal having a baud rate of 10 Gbaud or more, wherein a product of a scattering loss with respect to the optical signal and a length is 6 dB or less, and when a Gaussian beam emitted from a single-mode optical fiber is input by center excitation, the optical transmission path outputs the Gaussian beam with a beam diameter being enlarged by three times or more.

### Advantageous Effects of Invention

According to the present invention, it is possible to achieve high-quality and large-capacity communication with a simple configuration.

### Brief Description of Drawings

FIG. 1 is a schematic configuration diagram of an optical transmission system according to a first embodiment.
FIG. 2 is a diagram for explaining a method of measuring a beam diameter.
FIG. 3 is a diagram illustrating measurement results of beam diameters of input light and output light in a case where a glass optical fiber is used as a second optical transmission path of Reference Example 1.
FIG. 4 is a diagram illustrating measurement results of beam diameters of input light and output light in a case where a plastic optical fiber is used as a first optical transmission path.
FIG. 5 is a diagram illustrating a relationship between a length and a ratio of a beam diameter r₁ of output light to a beam diameter r₀ of input light in a case where a plastic optical fiber is used as the first optical transmission path.
FIG. 6 is a diagram illustrating a relationship between a modulation voltage and a common logarithm of an error rate (BER).
FIG. 7 is a schematic configuration diagram of an optical transmission system according to a second embodiment.
FIG. 8 is a diagram illustrating measurement results of beam diameters of input light and output light in a case where a plastic optical fiber is used as an optical transmission path.
FIG. 9 is a diagram illustrating a relationship between a length and a ratio of a beam diameter r₁ of output light to a beam diameter r₀ of input light in a case where a plastic optical fiber is used as an optical transmission path.
FIG. 10 is a diagram illustrating a constellation map of Comparative Example 4.
FIG. 11 is a diagram illustrating a constellation map of Example 10.
FIG. 12 is a diagram illustrating error vector amplitudes in 30 measurements in Example 10 and Comparative Example 4.
FIG. 13 is a diagram illustrating setting of an x axis and a z axis in an optical transmission path.
FIG. 14 is a diagram illustrating a relationship between Δx and a beam diameter of output light in Reference Example 1, Comparative Example 5, and Example 8.
FIG. 15 is a diagram illustrating a relationship between Δz and a beam diameter of output light in Reference Example 1, Comparative Example 5, and Example 8.
FIG. 16 is a diagram illustrating a relationship between Δx and a diameter of emitted beam in Reference Example 1, Comparative Example 5, and Example 8.
FIG. 17 is a diagram illustrating a relationship between Δz and a diameter of emitted beam in Reference Example 1, Comparative Example 5, and Example 8.
FIG. 18 is a diagram in which the diameter of emitted beam of FIG. 16 is normalized.
FIG. 19 is a diagram in which the diameter of emitted beam of FIG. 17 is normalized.
FIG. 20A is a diagram illustrating a relationship between Δx and an error rate in Reference Example 1.
FIG. 20B is a diagram illustrating a relationship between Δx and an error rate in Comparative Example 5.
FIG. 20C is a diagram illustrating a relationship between Δx and an error rate in Example 8.
FIG. 21A is a diagram illustrating a relationship between Δz and an error rate in Reference Example 1.
FIG. 21B is a diagram illustrating a relationship between Δz and an error rate in Comparative Example 5.
FIG. 21C is a diagram illustrating a relationship between Δz and an error rate in Example 8.
FIG. 22A is a diagram illustrating a relationship between Δx and a coupling loss in Reference Example 1.
FIG. 22B is a diagram illustrating a relationship between Δx and a coupling loss in Comparative Example 5.
FIG. 22C is a diagram illustrating a relationship between Δx and a coupling loss in Example 8.
FIG. 23A is a diagram illustrating a relationship between Δz and a coupling loss in Reference Example 1.
FIG. 23B is a diagram illustrating a relationship between Δz and a coupling loss in Comparative Example 5.
FIG. 23C is a diagram illustrating a relationship between Δz and a coupling loss in Example 8.
FIG. 24 is a diagram illustrating conditions for realizing an error-free transmission.
FIG. 25 is a schematic diagram of an experimental system for examining an influence of an inter-fiber gap.
FIG. 26A is a diagram illustrating a relationship between a modulation voltage and an error rate in Reference Example 1.
FIG. 26B is a diagram illustrating a relationship between a modulation voltage and an error rate in Comparative Example 5.
FIG. 26C is a diagram illustrating a relationship between a modulation voltage and an error rate in Example 8.

### Description of Embodiments

Hereinafter, embodiments of the present invention will be described in detail with reference to the drawings. The present invention is not limited by the embodiments.

### (First embodiment)

### [Configuration of optical transmission system]

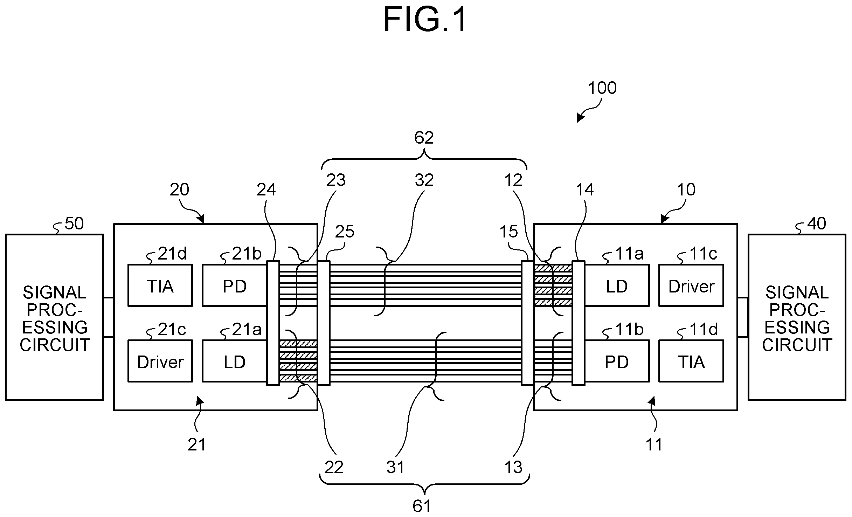

FIG. 1 is a schematic configuration diagram of an optical transmission system according to a first embodiment. An optical transmission system 100 includes optical signal transceivers 10 and 20, second optical transmission paths 31 and 32, and signal processing circuits 40 and 50. The optical signal transceivers 10 and 20 are an example of an optical signal transmitter and an example of an optical signal receiver. The optical signal transceivers 10 and 20 are configured as modules or onboard optics (OBO), for example.

The optical signal transceiver 10 includes a transceiver 11, a first optical transmission path 12, an in-device optical transmission path 13, and connectors 14 and 15. The optical signal transceiver 20 includes a transceiver 21, a first optical transmission path 22, an in-device optical transmission path 23, and connectors 24 and 25.

First, components of the optical signal transceiver 10 will be described. The transceiver 11 includes a laser diode (LD) 11a as a light source, a photodiode (PD) 11b as a light receiving device, a driver-IC 11c, and a trans-impedance amplifier (TIA)-IC 11d.

The LD 11a is, for example, a vertical cavity surface emitting laser (VCSEL), and performs laser oscillation at a wavelength of, for example, 850 nm. The LD 11a is controlled by the driver-IC 11c and outputs an optical signal modulated by a predetermined modulation method and having a predetermined modulation rate to the first optical transmission path 12. The modulation method is a digital modulation method, and is, for example, a binary modulation method such as Non Return to Zero (NRZ) or a multi-level modulation method such as PAM4, and the baud rate is, for example, 10 Gbaud or more, or 25 Gbaud or more. When NRZ is employed, the baud rate and the bit rate are equal (for example, 25 Gbaud = 25 Gbps), and when PAM4 is employed, the bit rate is twice the baud rate (for example, 25 Gbaud = 50 Gbps). In the present embodiment, the LD 11a is a four-channel array, but it may have any number of arrays of two or more channels, or may be a single unit.

The first optical transmission path 12 is optically connected to the LD 11a by the connector 14 and is optically connected to the second optical transmission path 32 by the connector 15. That is, the first optical transmission path 12 is disposed directly with the LD 11a as a light source or via a lens system. In FIG. 1, the case where the lens is interposed is omitted. The connectors 14 and 15 may be, for example, MT connectors, MPO connectors, or connectors having any other shape. The first optical transmission path 12 will be described in detail later. In the present embodiment, the first optical transmission path 12 includes four lanes like ribbons, but it may include any number of lanes of two or more lanes or may be a single lane.

With this configuration, the LD 11a transmits the optical signal output from the LD 11a to the first optical transmission path 12, the second optical transmission path 32, and the in-device optical transmission path 23, and transmits the optical signal to the optical signal transceiver 20.

The PD 11b receives the optical signal transmitted from the optical signal transceiver 20 through the first optical transmission path 22, the second optical transmission path 31, and the in-device optical transmission path 13, and changes the optical signal into a current signal. The TIA-IC 11d amplifies the current signal from the PD 11b, converts the signal into a voltage signal, and outputs the voltage signal to the signal processing circuit 40. In the present embodiment, the PD 11b and the TIA-IC 11d are four-channel arrays, but they may have any number of arrays of two or more channels, or may be a single unit.

The signal processing circuit 40 is electrically connected to the optical signal transceiver 10 by soldering, connector connection, or the like. The signal processing circuit 40 supplies a modulation signal to be superimposed on an optical signal to the driver-IC 11c and processes the voltage signal from the TIA-IC 11d.

Next, components of the optical signal transceiver 20 will be described. The transceiver 21 includes an LD 21a, a PD 21b, a driver-IC 21c, and a TIA-IC 21d.

The LD 21a is, for example, a VCSEL like the LD 11a and performs laser oscillation at a wavelength of, for example, 850 nm. The LD 21a is controlled by the driver-IC 21c and outputs an optical signal modulated by a predetermined modulation method and having a predetermined modulation rate to the first optical transmission path 22, like the LD 11a. In the present embodiment, the LD 21a is a four-channel array, but it may have any number of arrays of two or more channels or may be a single unit.

The first optical transmission path 22 is optically connected to the LD 21a by the connector 24 and is optically connected to the second optical transmission path 31 by the connector 25. That is, the first optical transmission path 22 is disposed directly with the LD 21a as a light source or via a lens system. The connectors 24 and 25 may be, for example, MT connectors, MPO connectors, or connectors having any other shape. The first optical transmission path 22 will be described in detail later. In the present embodiment, the first optical transmission path 22 includes four lanes like ribbons, but it may include any number of lanes of two or more lanes or may be a single lane.

With this configuration, the LD 21a transmits the optical signal output from the LD 21a to the first optical transmission path 22, the second optical transmission path 31, and the in-device optical transmission path 13, and transmits the optical signal to the optical signal transceiver 10.

The PD 21b receives the optical signal transmitted from the optical signal transceiver 10 through the first optical transmission path 12, the second optical transmission path 32, and the in-device optical transmission path 23, and changes the optical signal into a current signal. The TIA-IC 21d amplifies the current signal from the PD 21b, converts the signal into a voltage signal, and outputs the voltage signal to the signal processing circuit 50. In the present embodiment, the PD 21b and the TIA-IC 21d are four-channel arrays, but they may have any number of arrays of two or more channels or may be a single unit.

The signal processing circuit 50 is electrically connected to the optical signal transceiver 20 by soldering, connector connection, or the like. The signal processing circuit 50 supplies a modulation signal to be superimposed on an optical signal to the driver-IC 21c and processes the voltage signal from the TIA-IC 21d.

In this manner, the optical transmission system 100 is configured to enable bidirectional optical transmission, and the first optical transmission path 22, the second optical transmission path 31, and the in-device optical transmission path 13 constitute an optical transmission path 61 that transmits an optical signal. The first optical transmission path 12, the second optical transmission path 32, and the in-device optical transmission path 23 constitute an optical transmission path 62 that transmits an optical signal. The second optical transmission paths 31 and 32 and the optical signal transceivers 10 and 20 may be integrated to form an active optical cable (AOC).

### [Configuration of optical transmission path]

Next, configurations of the first optical transmission paths 12 and 22, the second optical transmission paths 31 and 32, and the in-device optical transmission paths 13 and 23 will be described.

First, the second optical transmission paths 31 and 32 are multi-mode optical fibers (MMFs) including glass such as quartz-based glass or plastic. A transmission loss (for example, a transmission loss at a wavelength of 850 nm) of the second optical transmission paths 31 and 32 with respect to an optical signal is, for example, 100 dB/km or less, or 50 dB/km or less, further 10 dB/km or less, and further 3 dB/km or less, a core diameter is, for example, about 50 um, and a numerical aperture (NA) is, for example, about 0.2. The second optical transmission paths 31 and 32 are longer than any of the first optical transmission paths 12 and 22 and the in-device optical transmission paths 13 and 23. The second optical transmission paths 31 and 32 may be of a graded index (GI) type.

Next, the first optical transmission paths 12 and 22 are optical fibers including glass such as quartz-based glass or optical fibers including plastic (plastic optical fiber: POF), and are MMFs. The first optical transmission paths 12 and 22 may be of a GI type. When the first optical transmission path is several cm to several tens of cm or less, a sufficient transmission band is secured, and thus the GI distribution is not necessary, and a step-index (SI) type distribution may be employed. As long as the first optical transmission path is a transmission path in which scattering is controlled as defined in the present invention, the shape of the first optical transmission path may be an optical waveguide shape, an optical fiber shape, or the like without particular limitation. That is, the shape of a section of the first optical transmission path may be, for example, a circular shape, a rectangular shape, or any other shape.

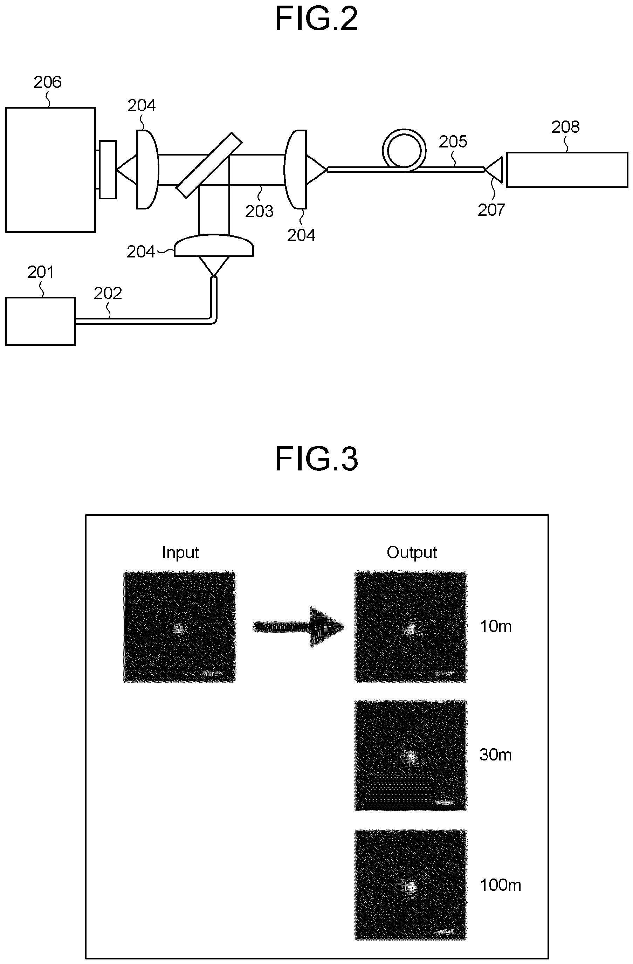

In the first optical transmission paths 12 and 22, a scattering loss (for example, a scattering loss at a wavelength of 850 nm) with respect to an optical signal is, for example, 50 dB/km or more, or 100 dB/km or more, or 200 dB/km or more, or 500 dB/km or more, or 1000 dB/km or more. In such first optical transmission paths 12 and 22, an optical signal is transmitted while being mode-coupled to a higher-order mode through forward scattering. As a result, each of the first optical transmission paths 12 and 22 outputs the input optical signal with the beam diameter of the optical signal being enlarged by three times or more. The second optical transmission paths 31 and 32 output the input optical signal with the beam diameter being enlarged by less than three times. When a Gaussian beam emitted from a single-mode optical fiber is input by center excitation, the first optical transmission paths 12 and 22 output the Gaussian beam with a beam diameter being enlarged by three times or more (see the evaluation in a center excitation state in FIG. 2). When a Gaussian beam emitted from a single-mode optical fiber is input by center excitation, the second optical transmission paths 31 and 32 output the beam with the beam diameter being enlarged by less than three times.

The inventors of the present invention conducted an experiment in which an optical signal output from the LD 11a or the LD 21a as described above was enlarged in beam diameter by the first optical transmission path 12 or 22, then transmitted through the second optical transmission path 31 or 32, and received by the PD 21b or the PD 11b. Then, it was surprisingly found that the error rate in the optical transmission is lower than when the optical transmission paths 61 and 62 do not include the first optical transmission paths 12 and 22.

In other words, the optical transmission system 100 can realize high-quality and large-capacity communication with a simple configuration in which the first optical transmission paths 12 and 22 having an extremely large beam diameter enlargement ratio are added to the second optical transmission paths 31 and 32 having a small beam diameter enlargement ratio as commonly used.

However, when the lengths of the first optical transmission paths 12 and 22 are too long, the loss of the optical signal with the first optical transmission paths 12 and 22 increases. Thus, for example, in the first optical transmission paths 12 and 22, the product of the scattering loss with respect to the optical signal and the length is preferably 6 dB or less. In this case, the length of the first optical transmission paths 12 and 22 may be 1 to several tens of cm. For example, when the optical signal transceivers 10 and 20 are configured as optical transceiver modules, it may be 1 to several cm. When the optical signal transceivers 10 and 20 are configured as OBOs, for example, the first optical transmission paths may be routed in the housing to have a length of several tens of cm.

In the present embodiment, the in-device optical transmission paths 13 and 23 are of the same type as any of the second optical transmission paths 31 and 32, for example. However, the in-device optical transmission paths 13 and 23 may be of the same type as any of the first optical transmission paths 12 and 22, for example. The lengths of the in-device optical transmission paths 13 and 23 may be, for example, about the same as any of the first optical transmission paths 12 and 22.

### (Formation of micro-heterogeneous structure)

Next, a preferred example of the first optical transmission paths 12 and 22 will be described in detail. For example, when a micro-heterogeneous structure having a correlation length of about several 100 angstroms or more is provided in the core of an optical fiber, it is possible to increase forward scattering different from so-called Rayleigh scattering observed in a silica-based glass-based optical fiber.

For example, a polymer chain having a molecular weight of 100,000 has a coiled structure and has a gyration radius of about several hundred angstroms. Further, the polymer coils may slightly associate with each other to form a large heterogeneous structure. In such a case, for example, the correlation distance increases as derived from Debye's scattering theory, and forward scattering further occurs, which contributes to mode coupling. The micro-heterogeneous structure may also be formed by a copolymer. A copolymer typically has a composition distribution, and is more likely to form a heterogeneous structure than a homopolymer, such as association of the same type of monomer units. Although these heterogeneous structures depend on the production conditions of extrusion molding, the molecular weight of the polymer, and the thermal history, when the enthalpy relaxation phenomenon can be effectively utilized and an appropriate metastable enthalpy state can be achieved, a polymer having a specific micro-heterogeneous structure can be mass-produced without problems in use. There is no such micro-heterogeneous structure in quartz glass.

It is also effective to add particles in a polymer or glass as a method of controlling scattering in addition to causing a polymer to have a micro-heterogeneous structure. For example, when considering a first optical transmission path of several cm or less that fits within an optical signal transceiver, scattering that enables stronger mode coupling is required. For this purpose, it is effective to add submicron or micron-order particles having different refractive indexes into the core. The particle candidate is not limited as long as it has a refractive index different from that of the polymer or glass medium constituting the core, and examples thereof include metal particles such as iron, silicon particles, silica particles, and mineral particles such as calcium carbonate, but the particles are not limited to these materials. Larger micron-sized particles are desirable than nano-sized particles to enhance forward scattering with these particles. Instead of adding particles, the formation of microvoids provides a similar effect and works effectively.

As an aspect of the GI-type POF, a refractive index distribution is formed by radially changing the concentration of a low-molecular-weight dopant having a refractive index different from that of the polymer matrix. The size of the dopant is on the order of several to several tens of angstroms, and the intensity of light scattering resulting from one molecule is negligibly small, but when the dopant concentration fluctuates slightly on the order of several hundred to several thousand angstroms, a micro-heterogeneous structure is thereby formed, and forward light scattering is induced. This slight dopant fluctuation/association is caused by a slight difference in compatibility between the polymer matrix and the dopant. Therefore, by considering the difference in compatibility between the polymer and the dopant using the solubility parameter as a guideline, it is possible to control the micro-heterogeneous structure due to fluctuation/association of the dopant and to control the mode coupling. In addition, by adding not only a dopant for forming a refractive index distribution but also a low molecule for forming a micro-heterogeneous structure, mode coupling caused by forward scattering can be controlled by the same principle.

For example, in an acrylic polymer, interactions in and between molecules exist because of an ester group present in a molecule. In contrast, a perfluorinated polymer such as dioxolene has no such an ester group. Thus, interactions in and between molecules are smaller than those of acrylic polymers. However, any polymer is an assembly of molecular coils with a gyration radius as large as several hundred angstroms, and a relatively stable micro-heterogeneous structure can be controlled, for example in extrusion.

### (Example of polymer used for first optical transmission path)

The polymer constituting a core part and a clad part of the first optical transmission paths 12 and 22 can be produced by a method known in the field. Examples thereof include a method of subjecting a mixture of monomers constituting a polymer to solution polymerization, bulk polymerization, emulsion polymerization, suspension polymerization, or the like. Of these, a bulk polymerization method is preferable from the viewpoint of preventing contamination of foreign matters and impurities.

The polymerization temperature at this time is not particularly limited, and for example, about 80 to 150°C is suitable. The reaction time may be appropriately adjusted according to the amount and type of the monomer, the amount of a polymerization initiator, a chain transfer agent, and the like described later, the reaction temperature, and the like, and about 20 to 60 hours is suitable. These polymers may be produced simultaneously or continuously when the core part and/or the clad part is formed.

Examples of the polymer constituting the core part include ethyl methacrylate, n-propyl methacrylate, n-butyl methacrylate, ethyl acrylate, n-propyl acrylate, and n-butyl acrylate as (meth)acrylic acid ester-based compound; styrene, α-methylstyrene, chlorostyrene, and bromostyrene as styrene-based compounds; vinyl acetate, vinyl benzoate, vinyl phenyl acetate, and vinyl chloroacetate as vinyl esters; N-n-butylmaleimide, N-tert-butylmaleimide, N-isopropylmaleimide, and N-cyclohexylmaleimide as maleimides, and substances in which some of the hydrogen atoms of the C-H bonds in these monomers are substituted with chlorine, substituted with fluorine, or substituted with deuterium. The stretching vibration between the C-H bonds constituting the polymer causes absorption loss due to overtone at a light source wavelength of 850 nm, for example. However, when the length of the first optical transmission path is several cm to several tens of cm or less, the absorption loss may be negligible. In such a case, a common polymer such as nonhalogenated acryl or styrene may be used.

In producing the polymer, it is preferable to use a polymerization initiator and/or a chain transfer agent. Examples of the polymerization initiator include common radical initiators. Examples of radical initiators include peroxide-based compounds such as benzoyl peroxide, t-butylperoxy-2-ethylhexanate, di-t-butyl peroxide, t-butylperoxyisopropyl carbonate, and n-butyl 4,4-bis(t-butylperoxy) valerate; and azo-based compounds such as 2,2'-azobisisobutyronitrile, 2,2'-azobis(2-methylbutyronitrile), 1,1'-azobis(cyclohexane-1-carbonitrile), 2,2'-azobis(2-methylpropane), 2,2'-azobis(2-methylbutane), 2,2'-azobis(2-methylpentane), 2,2'-azobis(2,3-dimethylbutane), 2,2'-azobis(2-methylhexane), 2,2'-azobis(2,4-dimethylpentane), 2,2'-azobis(2,3,3-trimethylbutane), 2,2'-azobis(2,4,4-trimethylpentane), 3,3'-azobis(3-methylpentane), 3,3'-azobis(3-methylhexane), 3,3'-azobis(3,4-dimethylpentane), 3,3'-azobis(3-ethylpentane), dimethyl-2,2'-azobis(2-methylpropionate), diethyl-2,2'-azobis(2-methylpropionate), and di-t-butyl-2,2'-azobis(2-methylpropionate). These may be used singly or in combination of two or more thereof. The polymerization initiator is suitably used in an amount of about 0.01 to 2 wt% with respect to the total amount of monomers.

The chain transfer agent is not particularly limited, and a known chain transfer agent may be used. Examples thereof include alkyl mercaptans (n-butyl mercaptan, n-pentyl mercaptan, n-octyl mercaptan, n-lauryl mercaptan, t-dodecyl mercaptan, and the like) and thiophenols (thiophenol, m-bromothiophenol, p-bromothiophenol, m-toluenethiol, p-toluenethiol, and the like). Of these, alkyl mercaptans such as n-butyl mercaptan, n-octyl mercaptan, n-lauryl mercaptan, and t-dodecyl mercaptan are suitably used. In addition, a chain transfer agent in which the hydrogen atom of a C-H bond is substituted with a deuterium atom or a fluorine atom may be used. These may be used singly or in combination of two or more thereof.

The chain transfer agent is usually used for adjusting the molecular weight to have an appropriate value in terms of molding and physical properties. The chain transfer constant of the chain transfer agent for each monomer may be determined by experiment with reference to, for example, Polymer Handbook, Third Edition (Edited by J. Brandrup and E. H. Immergut, published by John Wiley & Sons) and "Experimental Method for Polymer Synthesis" (Takayuki Otsu and Masaaki Kinoshita, Kagaku Dojin, published in 1972). Thus, in consideration of the chain transfer constant, it is preferable to appropriately adjust the type and addition amount of the monomer according to the type and the like of the monomer. For example, the content may be about 0.1 to 4 parts by weight with respect to 100 parts by weight of all monomer components.

As the polymer constituting the core part and/or the clad part, a polymer having a weight average molecular weight in a range of about 50,000 to 300,000 is suitable, and a polymer having a weight average molecular weight of about 100,000 to 250,000 is preferable. This is to ensure appropriate flexibility, transparency, and the like. The core part and the clad part may have different molecular weights, for example, for viscosity adjustment or the like. The weight average molecular weight refers to, for example, a value in terms of polystyrene measured by GPC (gel permeation chromatography).

A compounding agent, for example, a heat stabilization aid, a processing aid, a heat resistance improver, an antioxidant, a light stabilizer, or the like may be blended in the polymer constituting the first optical transmission paths 12 and 22 as necessary as long as performance such as transparency and heat resistance as an optical fiber is not impaired. These maybe be used singly or in combination of two or more thereof, and examples of a method of mixing these substances to be blended with a monomer or a polymer include a hot blending method, a cold blending method, and a solution mixing method.

### (Fluorine-containing polymer used for first optical transmission path)

When a fluorine-containing polymer (including perfluorinated materials and partially fluorinated materials) is used as the core material of the first optical transmission paths 12 and 22, it can be synthesized by the following method. [Synthesis Example A] Method of synthesizing perfluorinated material

As a perfluorinated material, typically, trade names TEFRON-AF (DuPont), Hyflon AD (Solvay), and CYTOP (AGC) may be used. A perfluoropolymer copolymerized with tetrafluoroethylene or the like may be used with the main ring structure of these materials. A perfluoropolymer having a dioxolene skeleton may also be used. Next, a method of synthesizing a perfluorinated material having a dioxolene skeleton will be described.

### <Synthesis of perfluoro-4-methyl-2-methylene-1,3-dioxolane>

2-Chloro-1-propanol, 1-chloro-2-propanol, and methyl trifluoropyruvate were subjected to a dehydration condensation reaction to obtain a purified product of 2-carbomethyl-2-trifluoromethyl-4-methyl-1,3-dioxolane. Next, fluorination of perfluoro-4-methyl-2-methylene-1,3-dioxolane is performed. A fluorination treatment was performed by using 1,1,2-trichlorotrifluoroethane as a solvent, causing nitrogen gas and fluorine gas to flow at constant flow rates, and slowly adding the previously prepared 2-carbomethyl-2-trifluoromethyl-4-methyl-1,3-dioxolane to a reaction tank under a nitrogen/fluorine atmosphere to obtain perfluoro-2,4-dimethyl-1,3-dioxolane-2-carboxylic acid. The above-described distillate was neutralized with an aqueous potassium hydroxide solution to obtain potassium perfluoro-2,4-dimethyl-2- carboxylate-1,3-dioxolane. This potassium salt was subjected to vacuum drying, and the salt was further decomposed under an argon atmosphere to obtain perfluoro-4-methyl-2-methylene-1,3-dioxolane. The perfluoro-4-methyl-2-methylene-1,3-dioxolane and perfluorobenzoyl peroxide obtained as described above were put in a glass tube, and degassed with a freezing/thawing vacuum machine, thereafter argon is refilled, then the obtained material was heated for several hours. The contents became solid and a clear polymer was obtained. An optical fiber was produced using this polymer.

The viscosity of the fluorine-containing polymer (including perfluorinated materials and partially fluorinated materials) in a molten state is preferably 10³ to 10⁵ poises at a melting temperature of 200°C to 300°C. When the melt viscosity is too high, not only melt spinning is difficult, but also diffusion of a dopant, which is necessary for forming a refractive index distribution, hardly occurs, and it is difficult to form a refractive index distribution. When the melt viscosity is too low, there is a problem in practical use. That is, when the optical fiber is used as an optical transmission body in an electronic device, an automobile, or the like, the optical transmission body is softened by exposure to a high temperature, and optical transmission performance degrades.

The number average molecular weight of the fluorine-containing polymer is preferably 10,000 to 5,000,000, and more preferably 50,000 to 1,000,000. When the molecular weight is too small, heat resistance may be impaired, and when the molecular weight is too large, it is difficult to form an optical transmission body having a refractive index distribution, which is not preferable.

### (Partially chlorinated polymer used for first optical transmission path)

When a partially chlorinated material is used as the core material of the first optical transmission paths 12 and 22, the partially chlorinated material may be synthesized by the same method as the above-described method of synthesizing a perfluorinated material, which is a common production method.

### [Synthesis Example B] Synthesis of partially chlorinated material (see JP 5419815 B)

Next, a method of producing a partially chlorinated material will be briefly described. Trichloroethyl methacrylate that had been distilled and purified in advance, cyclohexylmaleimide that had been sublimated and purified, and diphenyl sulfide as a dopant of a refractive index imparting agent were precisely weighed, and put into a glass container. Further, ditertiobutyl peroxide as a polymerization initiator and n-lauryl mercaptane as a chain transfer agent were added in predetermined amounts with respect to the concentration in the total weight. This solution was sufficiently mixed, and then the mixture was passed through a membrane filter having a pore diameter to be placed in a glass polymerization container and filtered. Next, dissolved air was removed by a freeze deaeration method while introducing argon gas into the glass polymerization tube containing this solution. The glass polymerization tube was placed in an oven, the temperature of the polymerization container was raised while introducing argon gas, the monomer was polymerized, and the temperature was further raised to complete the polymerization reaction. The glass tube was opened, and a solidified transparent polymerization rod was obtained.

### (Dopant for forming refractive index distribution)

When the solubility parameter of the dopant is equal to the solubility parameter of the polymer, and the dopant and the polymer have good compatibility, the dopant is uniformly present in the polymer matrix. On the other hand, as the difference between the solubility parameters of the dopant and the polymer increases, the tendency of the dopants to aggregate increases, and a refractive index heterogeneous structure due to the concentration distribution of the dopant is formed. In addition to the general knowledge of solubility parameters, it is also possible to form a microscopic concentration distribution of the dopant by adding a local interaction (for example, secondary electron polarization or the like corresponding to between specific functional groups) between the dopant and the polymer. As the dopant for the perfluorinated core material, a substance having a refractive index higher than that of the perfluoropolymer is commonly used. That is, the substance dopant is a substance having substantially no C-H bond for the same reason as for the perfluoropolymer, and more preferably has a refractive index larger than that of the perfluoropolymer by 0.05 or more. When the refractive index is larger, the content of the dopant necessary for forming a desired refractive index distribution may be smaller, and thus, the decrease in the glass transition temperature may be small, and as a result, the heat resistance of the optical fiber is enhanced.
Thus, the refractive index is particularly preferably larger by 0.1 or more.

As the dopant, a low molecular weight compound, an oligomer, or a polymer containing an aromatic ring such as a benzene ring, a halogen atom such as chlorine, bromine, or iodine, or a bonding group such as an ether bond is preferable, but in the case of a polymer, when the molecular weight increases, compatibility with the fluoropolymer decreases, and as a result, light scattering loss increases. Thus, a polymer having a too large molecular weight is not preferable. In the case of a compound having a small molecular weight, the glass transition temperature in the mixture with the fluorine-containing polymer is lowered, which causes a decrease in the heat resistance temperature of the optical fiber.
Thus, it is not preferable that the molecular weight is too small. Therefore, the number average molecular weight of the dopant is preferably 3 × 10² to 2 × 103, and more preferably 3 × 10² to 1 × 10³.

As a specific compound of the dopant, there is an oligomer that is a pentamer to octamer of chlorotrifluoroethylene, an oligomer that is a pentamer to octamer of dichlorodifluoroethylene, or a dimer to octamer oligomer obtained by polymerizing a monomer that provides an oligomer having a high refractive index (for example, a monomer having a chlorine atom) among monomers forming the perfluoropolymer, as described in JP H8-5848 A.

In addition to the halogen-containing aliphatic compound such as the oligomers, a halogenated aromatic hydrocarbon containing no hydrogen atom bonded to a carbon atom, a halogen-containing polycyclic compound, or the like may also be used. In particular, a fluorinated aromatic hydrocarbon or fluorine-containing polycyclic compound containing only a fluorine atom as a halogen atom (or containing a fluorine atom a relatively small number of chlorine atoms) is preferable from the viewpoint of compatibility with the fluorine-containing polymer. In addition, it is more preferable that these halogenated aromatic hydrocarbons and halogen-containing polycyclic compounds do not have a polar functional group such as a carbonyl group or a cyano group.

Examples of such a halogenated aromatic hydrocarbon include a compound represented by the formula Φr-Zb, where Φr is a b-valent fluorinated aromatic ring residue in which all hydrogen atoms are substituted with fluorine atoms, Z is a halogen atom other than fluorine, - Rf, -CO-Rf, -O-Rf, or -CN, where Rf is a perfluoroalkyl group, a polyfluoroperhaloalkyl group, or monovalent Φr, b is 0 or an integer of 1 or more. Examples of the aromatic ring include a benzene ring and a naphthalene ring. The number of carbon atoms of the perfluoroalkyl group or the polyfluoroperhaloalkyl group as Rf is preferably 5 or less. The halogen atom other than fluorine is preferably a chlorine atom or a bromine atom. Specific examples of the compound include 1,3-dibromotetrafluorobenzene, 1,4-dibromotetrafluorobenzene, 2-bromotetrafluorobenzotrifluoride, clopentafluorobenzene, bromopentafluorobenzene, iodopentafluorobenzene, decafluorobenzophenone, perfluoroacetophenone, perfluorobiphenyl, chloroheptafluoronaphthalene, and bromoheptafluoronaphthalene. Particularly preferable dopants as examples of the fluorine-containing polycyclic compound are chlorotrifluoroethylene oligomers, perfluoro(triphenyltriazine), perfluoroterphenyl, perfluoroquatrophenyl, perfluoro(triphenylbenzene), and perfluoroanthracene because they have good compatibility with a perfluoropolymer, particularly a fluorine-containing polymer having a ring structure in the main chain, have good heat resistance, and the like. Because of the good compatibility, a fluorine-containing polymer, particularly a fluorine-containing polymer having a ring structure in the main chain, and a substance to be mixed can be easily mixed by heating and melting at 200 to 300°C. In addition, both can be uniformly mixed by dissolving and mixing in a fluorine-containing solvent and then removing the solvent.

Examples of the dopant used for the partially chlorinated or partially fluorinated core material include low molecular weight compounds and compounds in which hydrogen atoms present in these compounds are substituted with deuterium atoms. Examples of the low molecular weight compound having a high refractive index include sulfur compounds such as diphenylsulfone (DPSO) and a diphenylsulfone derivative (for example, diphenylsulfone chloride such as 4,4'-dichlorodiphenylsulfone and 3,3',4,4'-tetrachlorodiphenylsulfone), diphenylsulfide (DPS), diphenylsulfoxide, dibenzothiophene, and a dithiane derivative; phosphoric acid compounds such as triphenyl phosphate (TPP) and tricresyl phosphate; benzyl benzoate; benzyl n-butyl phthalate; diphenyl phthalate; biphenyl; and diphenylmethane. Examples of the low molecular weight compound having a low refractive index include tris-2-ethylhexyl phosphate (TOP). These may be used singly or in combination of two or more thereof.

### (Method of producing first optical transmission path)

To make it easy to form a micro-heterogeneous structure, the temperature and the drawing speed at the time of spinning the optical fiber may be controlled. As a common method of producing an optical fiber using a fluorine-containing polymer, a preform method and a melt extrusion method are well known. In the preform method, a rod-shaped plastic molded body called a rod for a core and a clad is produced in advance. The core rod is disposed at the center, and the clad rod has a hollow part and is integrated so as to be covered with the outer peripheral part of the core, whereby a rod-shaped object called a preform is produced. This preform is set in a common spinning device, the outer peripheral part of the preform is uniformly heated and melted by a cylindrical heater or the like, the tip part is drawn at a constant speed to form a fiber, and the fiber is cooled and wound to obtain an optical fiber.

The melt extrusion method is a method in which a polymer in which a predetermined amount of a dopant is mixed in advance is used as a core polymer, a polymer containing no dopant is used as a clad polymer, and they are filled in a common melt extruder, the molten polymers are merged by two extruders and co-extruded, and both polymers are discharged from nozzles to obtain an optical fiber. An extruder having a screw may be normally used, but melt-extrusion may be performed with a pressure of nitrogen gas or the like. In addition, a covering layer may be provided as necessary.

It is also possible to form a micro-heterogeneous structure by a heat treatment step after co-extruding the molten core polymer and the molten clad polymer. For example, when rapid cooling is performed after coextrusion, the polymers are vitrified with a large volume before enthalpy relaxation of the polymers occurs. When a sufficient heat treatment step is performed at a temperature close to the glass transition temperature, the volume slightly decreases due to enthalpy relaxation. When the enthalpy relaxation is formed in the micro region, a so-called micro-heterogeneous structure is formed. In addition, when a stretching step is further added after the coextrusion, the molecules of the melt-extruded fiber are oriented, and orientation birefringence occurs depending on the degree of orientation. The orientation birefringence causes birefringence not only in a fiber axis direction but also in a radial direction and in a specific direction as a result. This birefringence structure also promotes mode coupling.

As a method of producing the optical fiber of the present invention, a method known in the field may be used. For example, to form one or two or more clad parts on the outer periphery of one or two or more core parts, an interfacial gel polymerization method, a rotary polymerization method, a melt extrusion dopant diffusion method, a composite melt spinning method, a rod-in tube method, or the like may be used. In addition, a preform may be formed in advance, and stretching, drawing, and the like may be performed.

Specifically, a method of producing a hollow clad part and producing a core part in the hollow part of the clad part may be exemplified. In this case, the monomer constituting the core part is introduced into the hollow part of the clad part, and the polymer is polymerized while rotating the clad part to form a core part having a refractive index higher than that of the clad part. This operation may be performed only once to form a core part of one layer, or this operation may be repeated to form a core part including a plurality of layers.

As the polymerization container to be used, a glass, plastic, or metallic cylindrical tube-shaped container (tube) having mechanical strength capable of withstanding external force such as centrifugal force due to rotation and heat resistance during thermal polymerization may be used. The rotation speed of the polymerization container during polymerization is, for example, about 500 to 3000 rpm. Usually, it is preferable that the monomer is filtered through a filter to remove dust contained in the monomer and then introduced into the polymerization container.

Examples of a method of providing a GI-type refractive index distribution in an optical fiber includes, as described in WO 93/08488, a rotary polymerization method including making a monomer composition ratio constant, adding a dopant, subjecting a monomer to bulk polymerization at an interface of a polymer, performing interfacial gel polymerization or a reaction mechanism of interfacial gel polymerization for imparting a concentration distribution of the dopant through the bulk polymerization reaction, and a method including gradually changing a composition ratio of monomers to be charged having different refractive indexes, that is, controlling a polymerization degree of an anterior layer (polymerization degree is lowered), polymerizing a following layer having a higher refractive index, and performing rotary polymerization in such a manner that the refractive index distribution gradually increases from an interface with a clad part to a central part.

Further, the core part and the clad part may be formed using two or more melt extruders, two or more layers of multilayer dies, and a multilayer spinning nozzle. That is, the polymers and the like constituting the core part and the clad part are heated and melted, and injected from individual flow paths to a multilayer die and a multilayer spinning nozzle. A fiber or a preform may be formed by extruding a core part with the die and the nozzle, and simultaneously extruding one layer or two or more layers of concentric clad part on the outer periphery of the core part and integrating the clad part and the core part by welding.

In addition, a melt extrusion dopant diffusion method in which a core part and a clad part are formed using two or more melt extruders, two or more layers of a multilayer die, and a multilayer spinning nozzle, and then a dopant is diffused toward a peripheral part or a central part in a heat treatment zone provided subsequently to the melt extruders to impart a concentration distribution of the dopant, a method in which a core part and/or a clad part are extrusion-molded in a multilayer structure by introducing a polymer or the like having a different dopant amount into two or more melt extruders, and the like are exemplified.

In the case of providing an SI-type refractive index distribution, it is suitable to perform rotational polymerization or the like while keeping the monomer composition ratio and/or the addition amount of the dopant constant from the beginning to the end. In the case of imparting a multistep type refractive index distribution, it is preferable to control the polymerization degree of an anterior layer (increase the polymerization degree) and polymerize a following layer having a higher refractive index in rotational polymerization or the like.

### (Examples 1 to 3 and Reference Example 1)

As Examples 1 to 3, a GI-POF produced by the melt extrusion method described above was used as the first optical transmission path. Then, the characteristics of the optical transmission path of Examples 1 to 3 and the characteristics of the second optical transmission path of Reference Example 1 including a silica-based optical fiber and having a transmission loss of 2.3 dB/km at a wavelength of 850 nm, a core diameter of about 50 um, and an NA of about 0.2 were measured.

FIG. 2 is a diagram for explaining a method of measuring a beam diameter. The beam diameter is obtained from the measurement of a near field pattern (NFP). That is, emitted light 203 (mode field diameter 4.9 um, Gaussian beam) from a pigtail (APC polishing) of a polarization-maintaining single-mode optical fiber 202 of a DBR laser 201 having a single frequency of a center wavelength of 850 nm is input to an optical transmission path 205 (first optical transmission path or second optical transmission path) through a half mirror using a lens 204. At this time, light is input to the center of the optical transmission path 205 via the lens 204 using microscopic observation by a CCD camera 206, and evaluation is performed under the center excitation condition. Then, the NFP of a light 207 output from the end face on the side opposite to the input end face of the optical transmission path 205 was measured using an NFP measuring device 208 (NFP 1006 manufactured by Precise Gauges), and the beam diameter of the light output from the optical transmission path 205 was obtained. The beam diameter of the light input to the optical transmission path 205 was obtained by measuring the light output from the lens 204 in the measurement system of FIG. 2.

FIG. 3 is a diagram illustrating measurement results of beam diameters of input light and output light in the second optical transmission path of Reference Example 1. FIG. 3 illustrates images measured as NFP. The input optical signal is indicated by "Input", the output optical signal is indicated by "Output", and the lengths of the second optical transmission path of Reference Example 1 were three types of 10 m, 30 m, and 100 m. The white bar in the figure is a scale of 10 um in length. Then, the beam diameter (D4σ width) was calculated from the measured NFP using a second order moment method. As can be seen from FIG. 3, the beam diameter of the input light was 4.9 µm, but in the second optical transmission path of Reference Example 1, the beam diameter was hardly enlarged even after transmission of 100 m, and the enlargement ratio was less than three times.

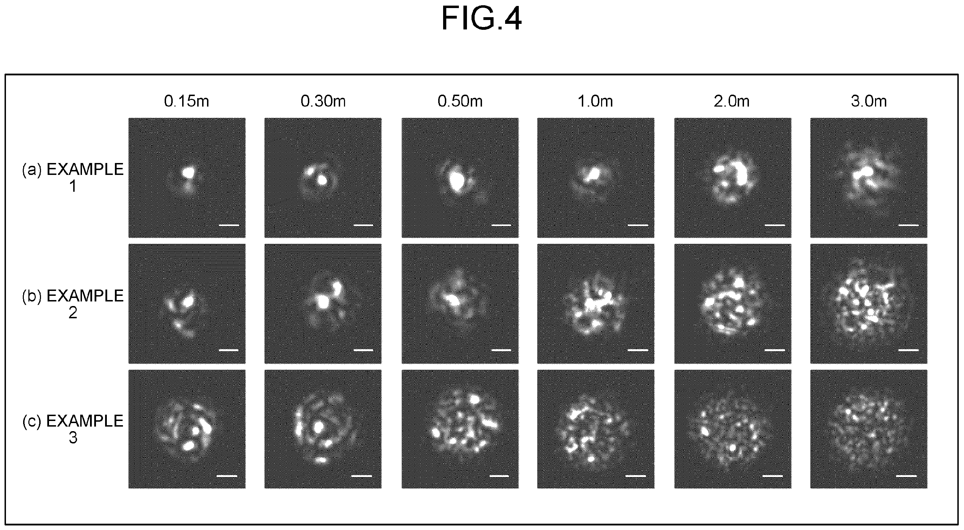

FIG. 4 is a diagram illustrating measurement results of beam diameters of light output in the first optical transmission path of Examples 1 to 3. FIG. 4 illustrates images measured as NFP. The beam diameter of the incident light is the same as "Input" in FIG. 3, and thus illustration is omitted. The characteristics of the first optical transmission path are as follows.

The first optical transmission path of Example 1 had an OTDR loss of 460 dB/km measured by an optical time domain reflectometer (OTDR) at a wavelength of 850 nm. This loss is considered to be mostly due to scattering loss. The core diameter was about 40 um to 45 µm.

The first optical transmission path of Example 2 had an OTDR loss of 870 dB/km. This loss is considered to be mostly due to scattering loss. The core diameter was about 42.8 µm.

The first optical transmission path of Example 3 had an OTDR loss of 2190 dB/km. This loss is considered to be mostly due to scattering loss. The core diameter was about 45.1 µm.

The lengths of the first optical transmission paths of Examples 1 to 3 were 0.15 m, 0.30 m, 0.50 m, 1.0 m, 2.0 m, and 3.0 m.

Parts (a), (b), and (c) of FIGS. 4 are NFP images of the first optical transmission paths of Examples 1, 2, and 3, respectively. As can be seen from FIG. 4, in each of the first optical transmission paths, the beam diameter was already enlarged at a length of 0.15 m, and was greatly enlarged at 3.0 m.

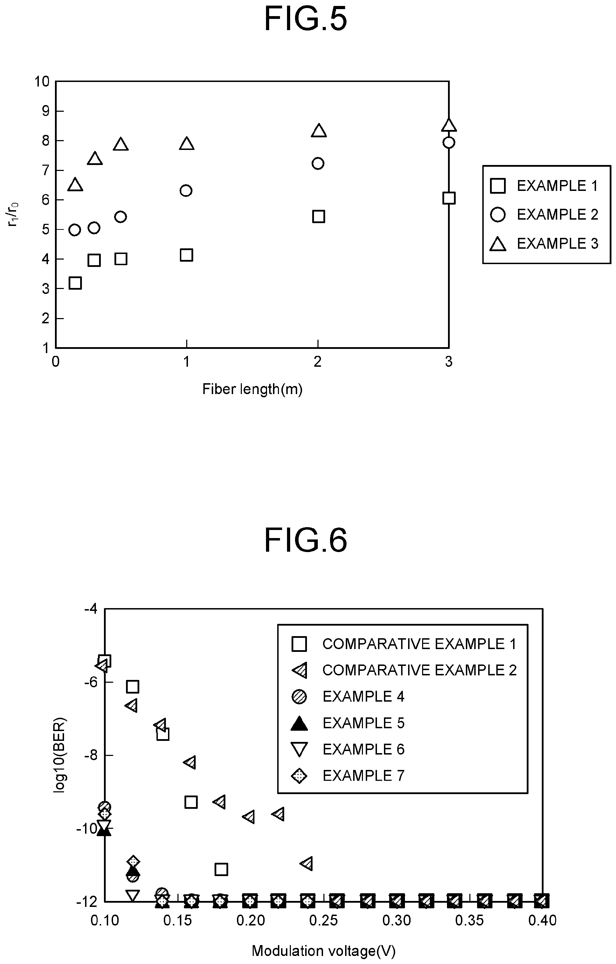

FIG. 5 is a diagram illustrating a relationship between a ratio r₁/r₀ of a beam diameter r₁ of output light to a beam diameter r₀ of input light in the first optical transmission paths of Examples 1 to 3 and a length (fiber length). As can be seen from FIG. 5, each of the first optical transmission paths of Examples 1 to 3 outputs the input optical signal with the beam diameter being enlarged by three times or more. That is, r₁/r₀ was 3 or more in any of the first optical transmission paths of Examples 1 to 3, and in particular, r₁/r₀ was 6 or more in any length in Example 3. This is considered to mean that mode coupling is more remarkably generated in the optical transmission path having a larger scattering loss in the first optical transmission path.

### (Examples 4 to 7, Comparative Examples 1 and 2)

Next, an optical transmission system having a configuration similar to that of the optical transmission system 100 according to the first embodiment was constructed using the first optical transmission path (OTDR loss: 2190 dB/km) of the third embodiment, and an error rate was measured.

Here, as an optical transmission system of Comparative Example 1, an optical transmission system was constructed in which the second optical transmission path having a length of 100 m of Reference Example 1 illustrated in FIG. 3 was used as the second optical transmission path 32, the first optical transmission path 12 and the in-device optical transmission path 23 were not connected, the optical signal transceiver 10 was used as an optical transmitter, and the optical signal transceiver 20 was used as an optical receiver.

As the optical transmission system of Example 4, in the configuration of the optical transmission system 100, the optical transmission system was constructed in which the second optical transmission path having a length of 100 m illustrated in FIG. 3 was used as the second optical transmission path 32, 0.15 m of the first optical transmission path of Example 3 was used as the first optical transmission path 12, the in-device optical transmission path 23 was not connected, the optical signal transceiver 10 was used as an optical transmitter, and the optical signal transceiver 20 was used as an optical receiver. However, the measurement was performed under the condition that the first optical transmission path 12 and the second optical transmission path 32 were connected via an air layer (gap) having a gap length of 50 um and the axial shift in the radial direction and the angular direction was negligible.

As the optical transmission system of Example 5, an optical transmission system was constructed in which 0.30 m of the first optical transmission path of Example 3 was used as the first optical transmission path 12 in the optical transmission system of Example 4.

As the optical transmission system of Example 6, an optical transmission system was constructed in which 0.50 m of the first optical transmission path of Example 3 was used as the first optical transmission path 12 in the optical transmission system of Example 5.

As the optical transmission system of Example 7, an optical transmission system was constructed in which 1.0 m of the first optical transmission path of Example 3 was used as the first optical transmission path 12 in the optical transmission system of Example 6.

As the optical transmission system of Comparative Example 2, an optical transmission system was constructed in which 3.0 m of the first optical transmission path of Example 3 was used as the first optical transmission path 12 in the optical transmission system of Example 7.

The LD was a VCSEL, the wavelength was 850 nm, the modulation method was a non return to zero (NRZ) pseudo random bit sequence (PRBS), the bit rate was 10 Gbps, the pattern length was 2³¹-1, the bias current was 5 mA, the modulation voltage was changed from 0.10 V to 0.40 V at 0.02 V intervals, and the measurement time was 10 minutes.

FIG. 6 is a diagram illustrating a relationship between a modulation voltage and a common logarithm of an error rate (BER). In FIG. 6, when log₁₀ (BER) is -12 or less, the data point is indicated as -12.

As illustrated in FIG. 6, in Examples 4 to 7, it has been confirmed that error-free transmission is realized at a modulation voltage lower than 0.20 V at which error-free transmission with a BER of 10⁻¹² or less is realized in Comparative Example 1. On the other hand, in the case of Comparative Example 2, the modulation voltage capable of realizing the error-free transmission was 0.26 V, which was higher than that in the case of Comparative Example 1. The reason for this is considered to be that in Comparative Example 2, the product of the scattering loss with respect to the optical signal having a wavelength of 850 nm and the length was 6.57 dB, which was larger than 6 dB, and thus, the loss of the optical signal was too large, and the quality was rather degraded.

The refractive index distribution shape in the core of the first optical transmission path is represented by a refractive index distribution coefficient g in generally used power law approximation (Bell Syst. Tech. J., vol. 52, no. 9, pp. 1563-1578, (1973)). The g value that minimizes the mode dispersion is usually around 2 although it depends on the material dispersion. However, the first optical transmission path may be several centimeters or less, and in this case, the mode dispersion can be almost ignored. In fact, although the refractive index distribution coefficient g of the first optical transmission path of Example 3 used in Examples 4 to 7 was around 7.5, the effect of drastically reducing the BER is exerted as illustrated in FIG. 6. That is, even when the g value is greatly far from g = 2 of the ideal distribution and is large, high-quality transmission can be achieved as long as the beam diameter (r₁/r₀) can be sufficiently expanded. The first optical transmission path may be an SI-shaped refractive index distribution having a larger g value of the refractive index distribution shape in the core. To efficiently expand the beam diameter (r₁/r₀) in a short distance, the refractive index distribution at the core center part may have a large g value approaching flat.

In the optical transmission system of Examples 4 to 7, since error-free transmission can be performed even when the modulation voltage is 0.16 V, it can be expected that error-free transmission is realized even when the modulation method is multi-level modulation of PAM4 or more.

In this manner, the optical transmission system 100 according to the first embodiment has an effect of realizing high-quality and large-capacity communication with a simple configuration. This means that signal degradation is further reduced when the optical transmission path also includes the first optical transmission path than when the optical transmission path includes only the second optical transmission path as the optical transmission path.

In particular, in the optical transmission system 100, since the error rate of 10⁻¹² or less can be realized without using an error correction method, problems such as complication of a configuration due to addition of a processor such as a DSP when using an error correction method, a transmission delay, deterioration of encoding efficiency, heat generation due to a load of the processor, and an increase in power consumption do not occur.

### (Second embodiment)

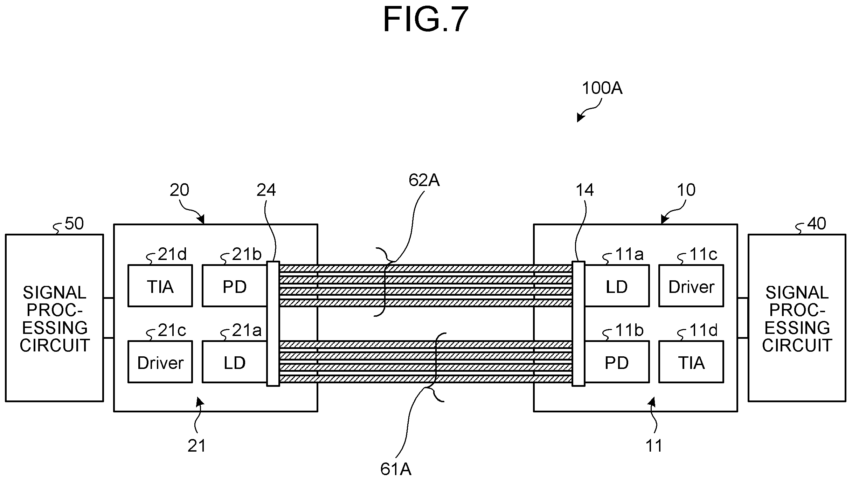

FIG. 7 is a schematic configuration diagram of an optical transmission system according to a second embodiment. An optical transmission system 100A has a configuration in which the connectors 15 and 25 are removed, the optical transmission path 61 is replaced with an optical transmission path 61A, and the optical transmission path 62 is replaced with an optical transmission path 62A in the optical transmission system 100 illustrated in FIG. 1.

The optical transmission paths 61A and 62A are MMFs including glass such as quartz-based glass or plastic. The optical transmission paths 61A and 62A may be of a GI type. In the optical transmission paths 61A and 62A, a product of the scattering loss with respect to an optical signal (for example, a wavelength of 850 nm) and the length is 6 dB or less, and the beam diameter of the Gaussian beam emitted from the single-mode optical fiber and input by central excitation is output with its beam diameter being enlarged by three times or more. A transmission loss (for example, a transmission loss at a wavelength of 850 nm) for an optical signal is, for example, 50 dB/km or more, or 100 dB/km or more, a core diameter is, for example, about 50 µm, and an NA is, for example, about 0.2. The optical transmission paths 61A and 62A have a length (transmission distance) of, for example, 100 m at the maximum.

Also when the optical transmission paths 61A and 62A are used as in the optical transmission system 100A, high-quality and large-capacity communication can be realized with a simple configuration as in the optical transmission system 100.

For example, in the optical transmission system 100A, the modulation method of the optical signal is a multi-level modulation method such as PAM4, and an error rate of 10⁻¹² or less that is error free can be realized without using an error correction method.

### (Example 8)

As Example 8, a GI-POF produced by the melt extrusion method described above was used as an optical transmission path. The optical transmission path of Example 8 had a transmission loss of 120 dB/km at a wavelength of 850 nm. This loss is considered to be mostly due to scattering loss. The core diameter was about 50 um, and the NA was about 0.185. The characteristics of the optical transmission path of Example 8 were measured. Specifically, beam diameters of light input to and light output from the optical transmission path of Example 8 were measured using the measurement method illustrated in FIG. 2.

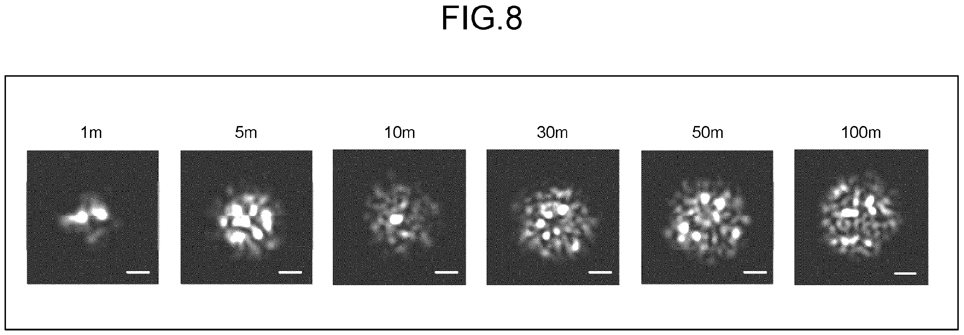

FIG. 8 is a diagram illustrating measurement results of beam diameters of light output in the optical transmission path of Example 8. FIG. 8 illustrates images measured as NFP. The lengths were 1 m, 5 m, 10 m, 30 m, 50 m, and 100 m. As can be seen from FIG. 8, in the optical transmission path, the beam diameter gradually enlarged as the length increased.

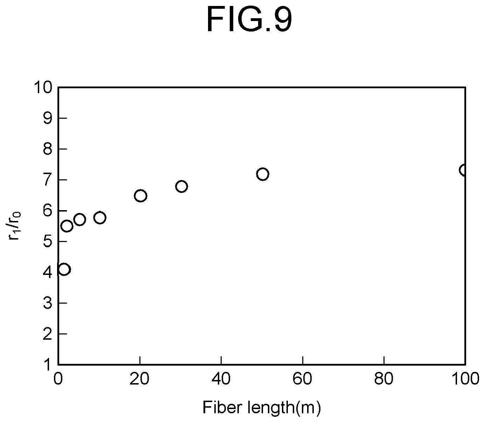

FIG. 9 is a diagram illustrating a relationship between a ratio r₁/r₀ of a beam diameter r₁ of output light to a beam diameter r₀ of input light in the optical transmission path of Example 8 and a length (fiber length). As can be seen from FIG. 9, the optical transmission path of Example 8 outputs the input optical signal with the beam diameter being enlarged by three times or more. That is, in the optical transmission path of Example 8, r₁/r₀ was 3 or more, specifically, r₁/r₀ was 4 or more when the length was 1 m or more.

### (Example 9 and Comparative Example 3)

Next, an optical transmission system of Example 9 having a configuration similar to that of the optical transmission system 100A according to the second embodiment was constructed using the optical transmission path of Example 8 having a length of 10 m, and an error rate was measured. The optical transmission path 62A including the optical transmission path of Example 8 having a length of 10 m was connected to the PD 11b, and a loop-back measurement of one channel was performed.

At this time, the LD was a VCSEL, the wavelength was 850 nm, the modulation method was PAM4 PRBS, the pattern length was 2³¹-1, the baud rate was 26.5625 Gbaud, the bit rate was 53.125 Gbps, the modulation voltage was 0.6 V (differential signal, peak-to-peak value), and the measurement time was 30 minutes.

As a result, the BER was 1.0 × 10⁻¹³ or less over 30 minutes, and error-free transmission was realized.

Here, as an optical transmission system of Comparative Example 3, an optical transmission system was constructed by replacing the optical transmission path of Example 8 having a length of 10 m with an optical transmission path of a glass optical fiber having a length of 2 m in the configuration of the optical transmission system of Example 9. The optical transmission path having a length of 2 m is optically connected to the LD 11a and the PD 11b by a mini-MT connector. The error rate was measured under the same conditions as those of the optical transmission system of Example 9. One measurement time was set to 3 minutes, the mini-MT connector was inserted and removed for each measurement, and a total of five BER measurements were performed. As a result, the BER varied greatly between 10⁻⁶ and 10⁻¹² every time the measurement was performed. This indicates that the transmission quality depends on the mutual connection states of the light source (VCSEL), the optical receiver (PD), and the optical transmission path, and it has been confirmed that error correction by the FEC is necessary to perform high-quality error-free transmission.

In an optical link, transmission quality degrades due to various noises (reflected return optical noise, mode noise, and the like) depending on a connection state of an optical fiber. In particular, the reflected return light noise causes a significant increase in noise level and is considered to be a main factor of transmission quality degradation.

In a normal quartz-based optical fiber, an influence of mode coupling in the optical fiber can be ignored, and thus, reflected return light maintains high coherence, is efficiently coupled to a laser resonator, causes large noise, and transmission quality (bit error rate) may degrade.

In a GI-type POF, the field pattern, the coherence, and the spatial distribution of the polarized wave of reflected return light are randomized due to the mode coupling, and the coherence (coherence) of the light is lowered. This decreases the correlation between the reflected return light and the in-laser resonator mode, decreases the self-coupling rate of the reflected return light to the laser resonator, and reduces the reflected return light noise. Thus, by using a GI-type POF, degradation in transmission quality caused by reflected return light is reduced, and error-free transmission is suitably realized without using FEC.

However, even with a silica-based optical fiber, by appropriately generating mode coupling by having a scatterer (fine particles or the like) in the core, error-free transmission can be achieved without using FEC.

### (Analog modulation method)

In the above embodiments, Examples, and Comparative Examples, the modulation method is a digital modulation method, but the present invention may also be applied to an optical transmission system in which the modulation method is an analog modulation method. Radio over Fiber (RoF) is a technology related to an optical transmission system of an analog modulation system.

RoF is a technology for transmitting a wireless signal using an optical fiber, and is being utilized in a wireless communication field and a broadcasting field. For example, in wireless communication, RoF is used for transmission of a radio signal between a base station and an antenna. In 5G and future Beyond 5G and 6G, it is required to install a larger number of antennas than before in order to improve the transfer speed and eliminate the radio wave dead zone, and thus it is predicted that the importance of the RoF technology will further increase in the future.

In RoF transmission, a light source is directly modulated by a radio signal, and a radio signal waveform is directly converted into an optical signal waveform and transmitted through an optical fiber. This corresponds to analog modulation of an optical signal, and thus, in RoF transmission, slight noise generated in an optical transmission path causes degradation in transmission quality. That is, in order to establish a high-quality RoF transmission technology, noise reduction of an optical transmission system is an important issue.

The optical transmission system of the analog modulation method according to the embodiment of the present invention can have a configuration similar to that of the optical transmission system 100 according to the first embodiment illustrated in FIG. 1 or the optical transmission system 100A according to the second embodiment illustrated in FIG. 7. Note that, in the analog modulation method, an RF amplifier or the like is used instead of the TIA-IC. In addition, in the case of broadcasting use, the optical transmission system of the analog modulation method may be configured as a unidirectional system of only distribution, instead of a bidirectional configuration as in the optical transmission systems 100 and 100A.

### (Example 10 and Comparative Example 4)

As an optical transmission system of an analog modulation system of Example 10, similarly to Example 6, an optical transmission system was constructed using the second optical transmission path having a length of 100 m of Reference Example 1 and the first optical transmission path having a length of 0.50 m of Example 3 illustrated in FIG. 3 as optical transmission paths. As an optical transmission system of an analog modulation system of Comparative Example 4, an optical transmission system was constructed using only the second optical transmission path having a length of 100 m of Reference Example 1 as an optical transmission path. An RoF transmission experiment was performed in the optical transmission systems of Example 10 and Comparative Example 4.

The LD was a VCSEL, the wavelength was 850 nm, and the bias current was 5 mA. The transmission signal was a radio signal of an orthogonal frequency division multiplexing (OFDM) system, the modulation system was 64 quadrature amplitude modulation (64 QAM), the center frequency was 880 MHz, the bandwidth was 20 MHz, and the input signal strength was -10 dBm.

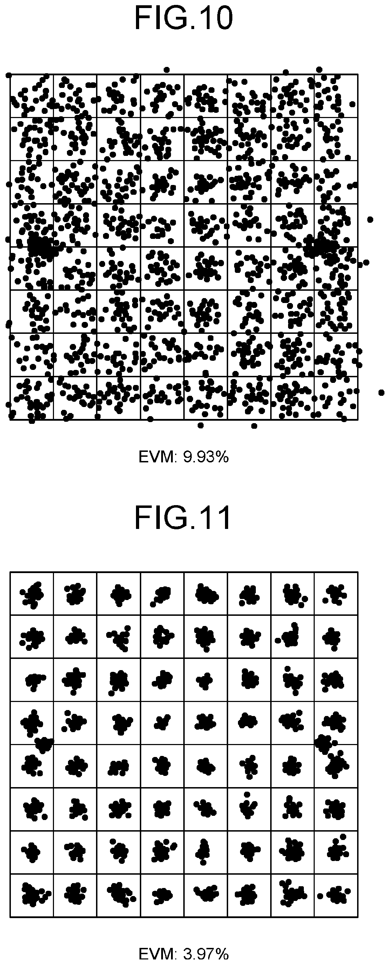

FIG. 10 is a diagram illustrating a constellation map of Comparative Example 4. The error vector amplitude (EVM) in this case was 9.93%. FIG. 11 is a diagram illustrating a constellation map of Example 10. The error vector amplitude (EVM) in this case was 3.97%. As can be seen from FIGS. 10 and 11, in Example 10, the variation of the signal points in the constellation map was greatly reduced as compared with Comparative Example 4, and the EVM of the transmission signal was reduced. This is considered to be because noise generated in the optical transmission path is significantly reduced by mode coupling inside the first optical transmission path.

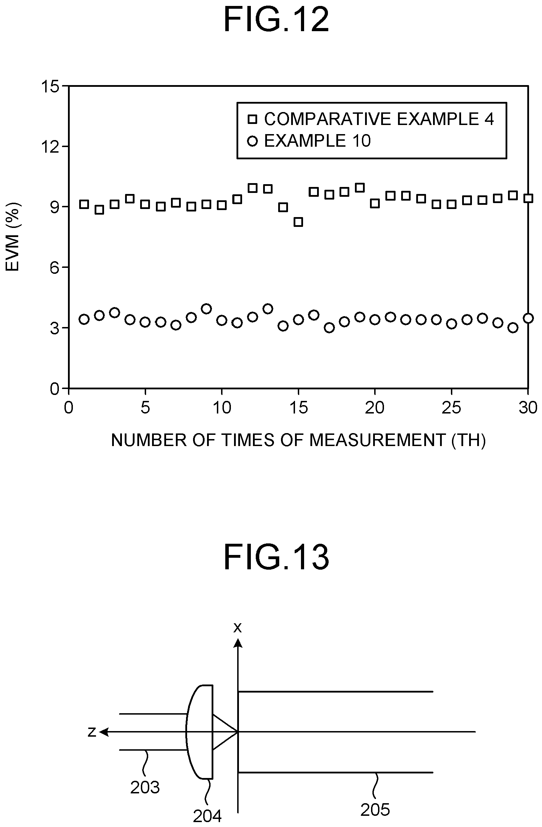

FIG. 12 is a diagram illustrating error vector amplitudes in 30 measurements in Example 10 and Comparative Example 4. In Comparative Example 4, the EVM was about 9%, but in Example 10, the EVM was able to be reduced to about 3%. The above results indicate that the optical transmission system according to the embodiment of the present invention is useful not only for digital data transmission but also for RoF transmission.

### (Third embodiment)

In a case where a light source such as an LD in an optical signal transmitter and an optical fiber of an optical transmission path are optically connected via a lens or the like, the light source may become unstable due to return light from the optical fiber, noise may increase, and transmission quality may be impaired.

It is known that the influence of the return light from an optical fiber can be reduced by shifting the axes of the optical fiber and a light source from each other to some extent or defocusing the light source. However, positional shift such as axial shift and defocus increases coupling loss between the light source and the optical fiber, and causes degradation of the SN ratio of the transmission signal.

As a result of intensive studies, the inventors of the present invention have found that the influence of return light depending on the amount of positional shift between the optical fiber and the light source can be reduced by reducing the excitation condition dependence of the beam diameter of light emitted from the optical fiber by utilizing mode coupling in the optical fiber. Then, it has been found that the alignment requirement of the optical fiber for realizing high-quality optical transmission can be greatly relaxed. Hereinafter, a third embodiment will be described as an embodiment with such a configuration.

An optical transmission system according to the third embodiment has a configuration similar to that of the optical transmission system according to the second embodiment illustrated in FIG. 7. Here, in the optical transmission path of the optical transmission system according to the third embodiment, the ratio of the minimum value to the maximum value of the beam diameter of a Gaussian beam to be output is 0.7 or more when the Gaussian beam emitted from the single-mode optical fiber is input with its position being shifted. This can greatly relax the alignment requirement of the optical fiber for realizing high-quality optical transmission. As a result, high-precision alignment of the optical element (light source, lens, optical fiber, and the like) becomes unnecessary, and thus, the optical transmission system can be easily manufactured at low cost. In the optical transmission path, the product of the scattering loss with respect to the optical signal and the length is preferably 6 dB or less.

As the optical transmission path of the optical transmission system according to the third embodiment, for example, the GI-POF of Example 8 may be used. Thus, results of an experiment using the optical transmission path of Reference Example 1, the optical transmission path of Example 8, and the optical transmission path of Comparative Example 5 which is a commercially available GI-POF will be described below. The optical transmission path of Comparative Example 5 had an OTDR loss of about 60 dB/km. This loss is considered to be mostly due to scattering loss. The core diameter was about 50 µm.

First, for the optical transmission paths of Reference Example 1, Comparative Example 5, and Example 8 having a length of 10 m, the relationship between the positional shift and the beam diameter was measured using the measurement system illustrated in FIG. 2. Here, as illustrated in FIG. 13, the optical axis direction of the emitted light 203 (or the lens 204) was taken as a z axis, and the radial direction was taken as an x axis. Then, the optical transmission path 205 was shifted in the z axis direction or the x axis direction around the condensing position of the emitted light 203 from the lens 204, and the emitted light 203 was caused to enter the lens. In this case, the shift amount Δx = 0 indicates a state in which the optical axis of the emitted light 203 coincides with the optical axis of the optical transmission path 205. The shift amount Δz = 0 indicates a state in which the condensing position of the emitted light 203 coincides with an input end face of the optical transmission path 205. Then, the NFP of the light output from the end face on the opposite side of the input end face of the optical transmission path 205 was measured using an NFP measuring device, and the beam diameter (D4σ width) of the light output from the optical transmission path 205 was obtained from the NFP using a second order moment method. The beam diameter of the light input to the optical transmission path 205 was obtained by measuring the light output from the lens 204 in the measurement system of FIG. 2.

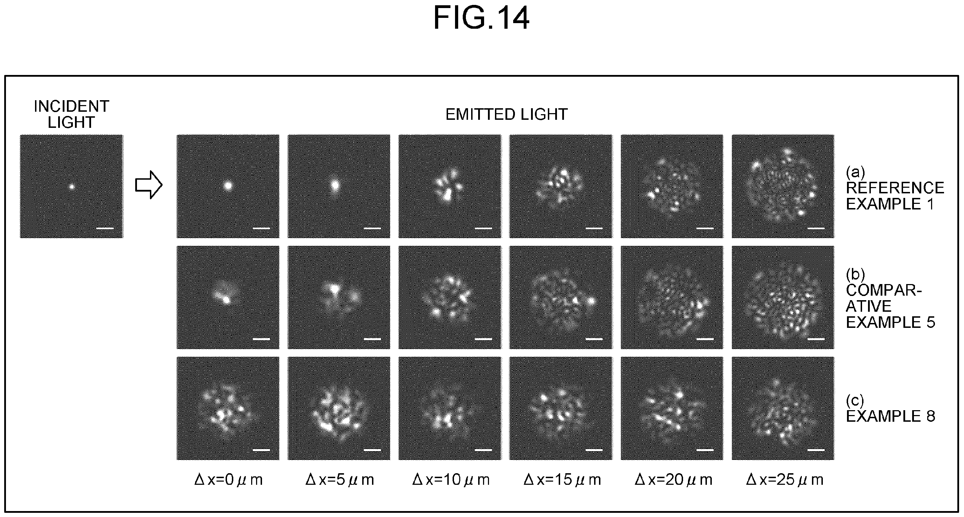

FIG. 14 is a diagram illustrating a relationship between Δx and a beam diameter of output light in Reference Example 1, Comparative Example 5, and Example 8. FIG. 14 illustrates images measured as NFP. The white bar in the figure is a scale of 10 um in length. As can be seen from FIG. 14, in the case of Reference Example 1 and Comparative Example 5, the beam diameter of the output beam tended to increase as the shift amount Δx increased. This is because the beam incident position moves from the center of the core of the optical transmission path to the outer periphery of the core, whereby a higher-order mode is excited. On the other hand, in the case of Example 8, the size of the output beam was substantially constant regardless of the shift amount Δx. This is considered to be because the higher-order mode is excited regardless of the excitation condition by strong mode coupling in the optical transmission path.

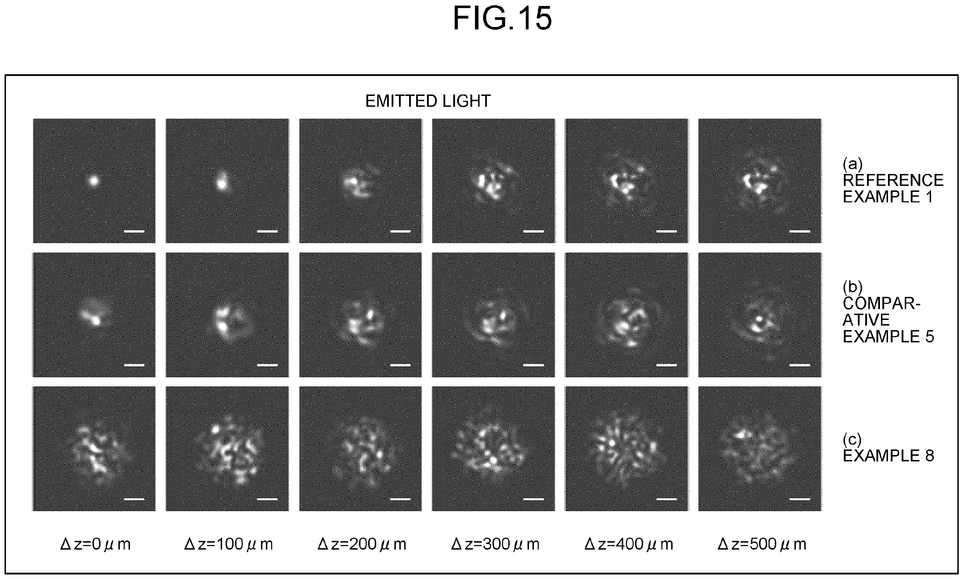

FIG. 15 is a diagram illustrating a relationship between Δz and a beam diameter of output light in Reference Example 1, Comparative Example 5, and Example 8. In the case of Reference Example 1 and Comparative Example 5, the beam diameter of the emitted beam tended to increase as the shift amount Δz increased, in the same manner as in the case of Δx. On the other hand, in the case of Example 8, the size of the emitted beam was substantially constant regardless of the shift amount Δz.

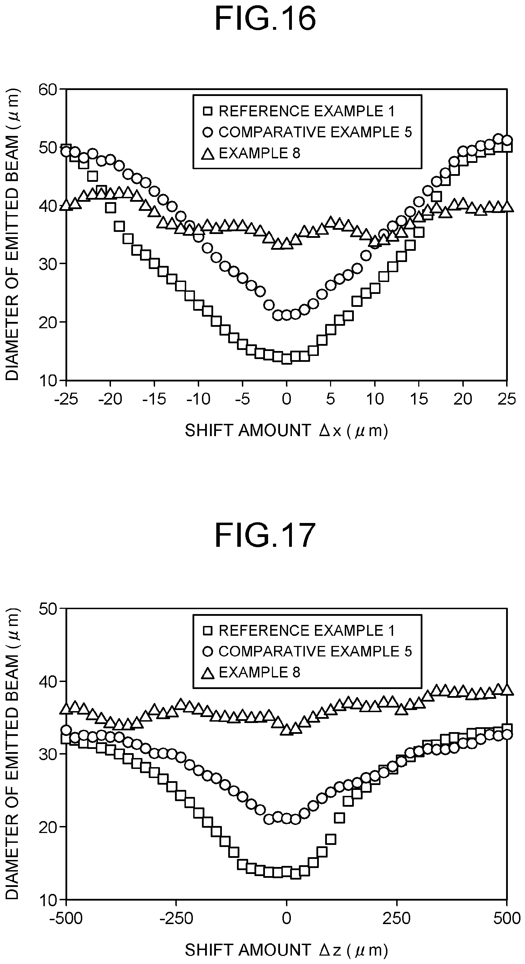

FIG. 16 is a diagram illustrating a relationship between Δx and a diameter of emitted beam in Reference Example 1, Comparative Example 5, and Example 8. FIG. 17 is a diagram illustrating a relationship between Δz and a diameter of emitted beam in Reference Example 1, Comparative Example 5, and Example 8. As can be seen from FIGS. 16 and 17, in the case of Reference Example 1 and Comparative Example 5, the diameter of emitted beam is minimized in the vicinity of Δx = 0 and Δz = 0, and the diameter of emitted beam tends to increase as the shift amount increases. On the other hand, in the case of Example 8, the diameter of emitted beam significantly increased in the vicinity of Δx = 0 and Δz = 0, and the shift amount dependency of the diameter of emitted beam significantly decreased.

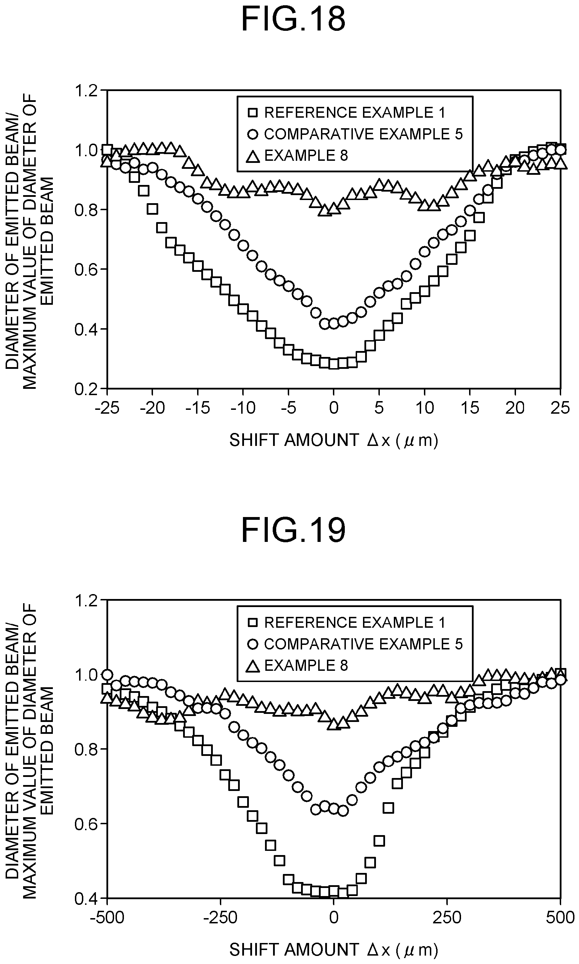

FIG. 18 is a diagram in which the diameter of emitted beam of FIG. 16 is normalized. FIG. 19 is a diagram in which the diameter of emitted beam of FIG. 17 is normalized. The emission beam diameter was normalized by dividing the diameter of emitted beam at each shift amount by the maximum value of the diameter of emitted beam. That is, the vertical axis in FIGS. 18 and 19 represents (diameter of emitted beam)/(maximum value of diameter of emitted beam).

As can be seen from FIG. 18, (minimum value of diameter of emitted beam)/(maximum value of diameter of emitted beam) at the positional shift in the x-axis direction is 0.27 in Reference Example 1, 0.41 in Comparative Example 5, and 0.79 in Example 8. As can be seen from FIG. 19, (minimum value of diameter of emitted beam)/(maximum value of diameter of emitted beam) at the positional shift in the z-axis direction is 0.41 in Reference Example 1, 0.63 in Comparative Example 5, and 0.86 in Example 8.

Next, an optical transmission system similar to the optical transmission system 100A according to Embodiment 2 was constructed by using the optical transmission paths of Reference Example 1, Comparative Example 5, and Example 8 having a length of 10 m, in which the optical signal transceiver 10 was used as an optical transmitter, and the optical signal transceiver 20 was used as an optical receiver. Then, the error rate was measured by variously changing the shift amount in the x-axis direction and the shift amount in the z-axis direction.

At this time, the LD was a VCSEL, the wavelength was 850 nm, the modulation method was NRZ PRBS, the bit rate was 10 Gbps, the pattern length was 2³¹-1, the bias current was 5 mA, the modulation voltage was 0.12 V, and the measurement time was 5 minutes.

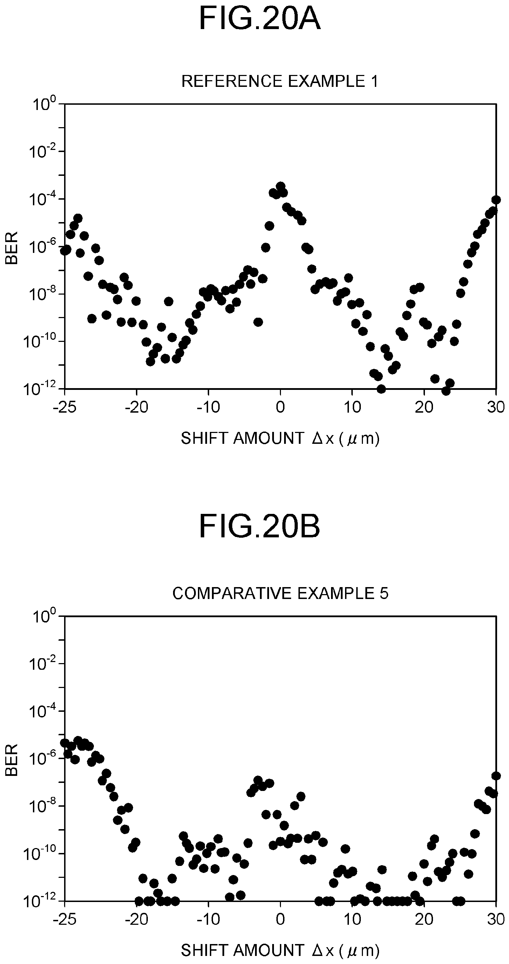

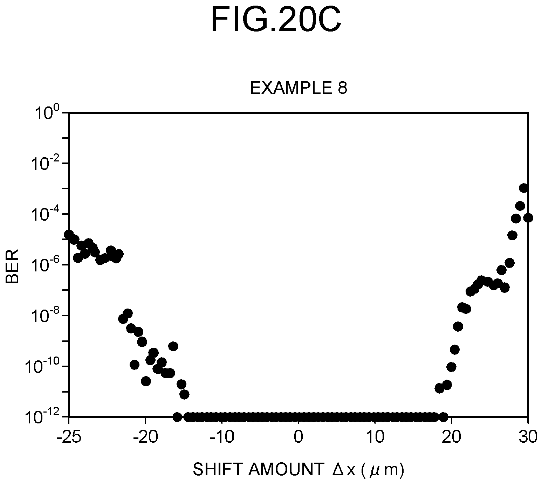

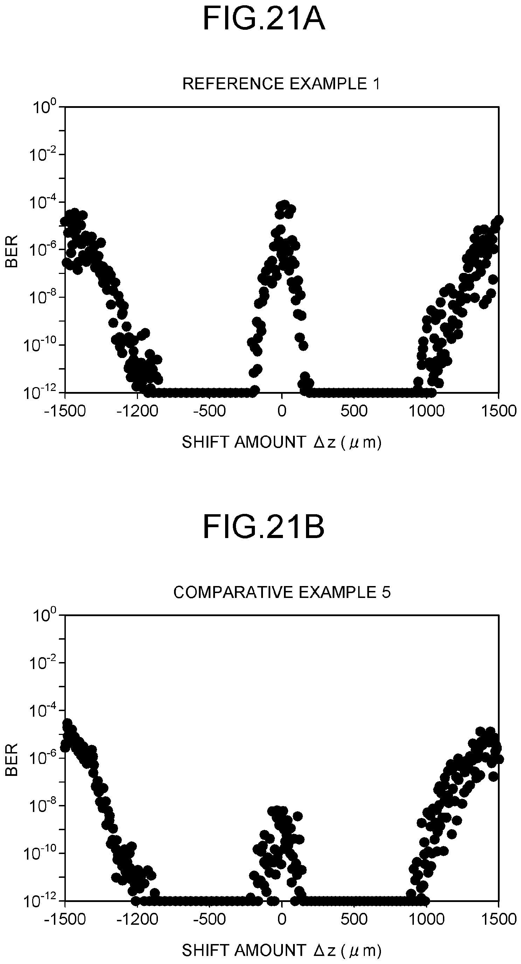

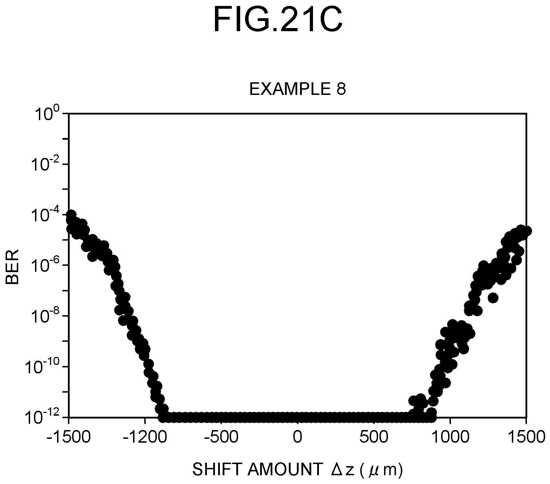

FIGS. 20A, 20B, and 20C are diagrams illustrating relationships between Δx and error rates in Reference Example 1, Comparative Example 5, and Example 8, respectively. FIGS. 21A, 21B, and 21C are diagrams illustrating relationships between Δz and error rates in Reference Example 1, Comparative Example 5, and Example 8, respectively.

As can be seen from FIGS. 20A to 20C and 21A to 21C, in the case of Reference Example 1 and Comparative Example 5, the BER degraded and had peaks near Δx = 0 and Δz = 0, and the peak value was about 10⁻⁴ in Reference Example 1 and about 10⁻⁸ in Comparative Example 5. Then, the BER tended to decrease with an increase in the shift amount. This is because the influence of the return light decreases as the shift amount increases. On the other hand, when the shift amount became too large (when Δx exceeds about ± 20 um and Δz exceeds about ± 1000 pm), the influence of an increase in coupling loss became dominant, and the BER turned to an increasing trend.

From the above, in the case of Reference Example 1 and Comparative Example 5, (the minimum value of diameter of emitted beam)/(the maximum value of diameter of emitted beam) is less than 0.7, but in order to reduce the influence of the return light while minimizing the coupling loss, more precise alignment between the light source and the optical transmission path is required.

On the other hand, in the case of Example 8, BER degradation was not observed in the vicinity of Δx = 0 and in the vicinity of Δz = 0, and error-free transmission with a BER of 10⁻¹² or less was achieved under all conditions of -14.5 um ≤ Δx ≤ + 18 um and -850 um ≤ Δz ≤ +730 um. From the above, in the case of Example 8, (the minimum value of diameter of emitted beam)/(the maximum value of diameter of emitted beam) is 0.7 or more, but error-free transmission can be achieved without performing precise alignment.

Next, for the optical transmission paths of Reference Example 1, Comparative Example 5, and Example 8, the coupling loss was measured by variously changing the shift amount in the x-axis direction and the shift amount in the z-axis direction.

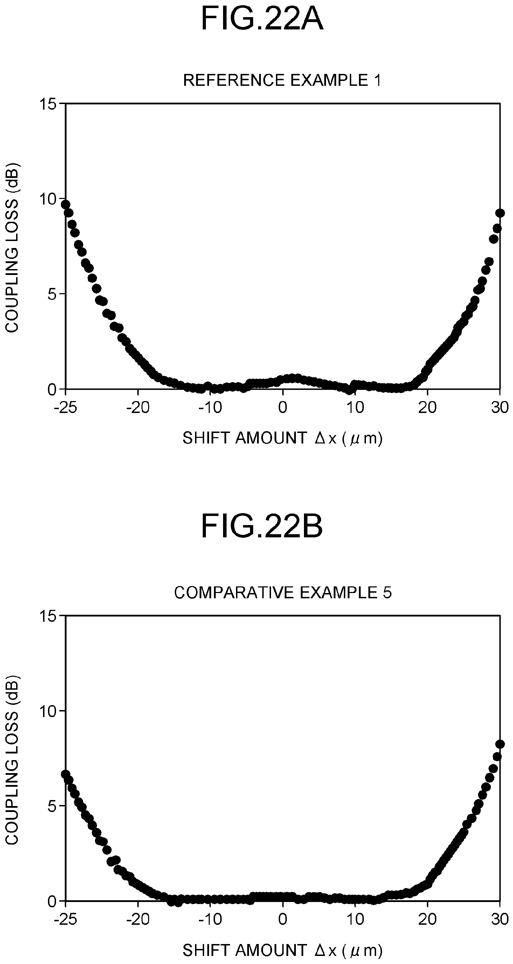

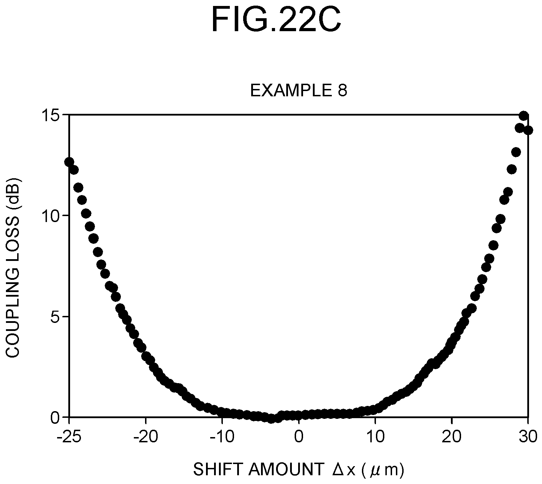

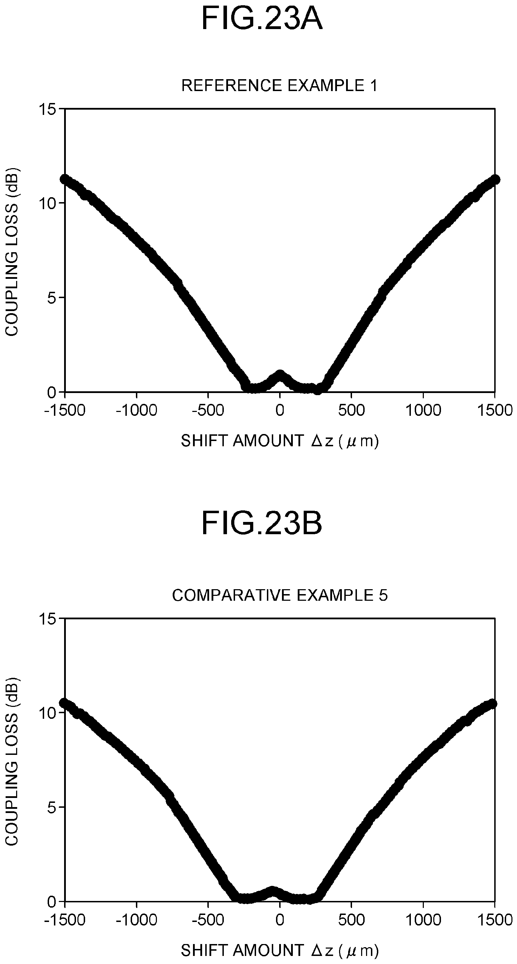

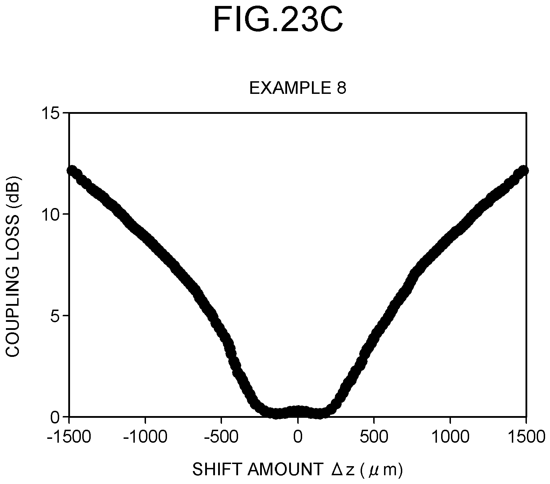

FIGS. 22A, 22C, and 22C are diagrams illustrating relationships between Δx and coupling loss in Reference Example 1, Comparative Example 5, and Example 8, respectively. FIGS. 23A, 23B, and 23C are diagrams illustrating relationships between Δz and coupling loss in Reference Example 1, Comparative Example 5, and Example 8, respectively. In all of Reference Example 1, Comparative Example 5, and Example 8, the coupling loss tended to increase with an increase in the shift amount.

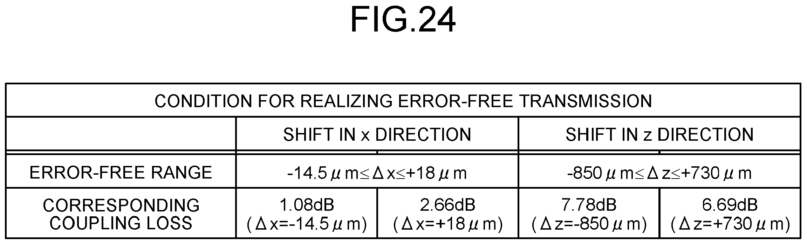

FIG. 24 is a diagram illustrating conditions for realizing the error-free transmission using the optical transmission path of Example 8 obtained from the results of FIGS. 20C, 21C, 22C, and 23C. When the optical transmission path of Example 8 was used, error-free transmission was achieved in the range of -14.5 um ≤ Δx ≤ +18 um. The coupling loss at Δx = -14.5 um was 1.08 dB, and the coupling loss at Δx = +18 um was 2.66 dB. When the optical transmission path of Example 8 was used, error-free transmission was achieved in the range of -850 um ≤ Δz ≤ +730 um. The coupling loss at Δz = -850 um was 7.78 dB, and the coupling loss at Δx = +730 um was 6.69 dB. From the above results, according to the optical transmission path of Example 8, it is possible to realize an error rate of 10⁻¹² or less regardless of the amount of positional shift under the optical coupling condition under which the coupling loss between the optical signal transmitter (light source) and the optical transmission path is 1 dB or less. Further, for example, according to the optical transmission paths of Reference Example 1 and Comparative Example 5, the worst value of the error rate is larger than 10⁻⁸ even under the optical coupling condition under which the coupling loss between the optical signal transmitter (light source) and the optical transmission path is 1 dB or less. On the other hand, according to the optical transmission path of Example 8, the worst value of the error rate is 10⁻⁸ or less under the optical coupling condition under which the coupling loss between the optical signal transmitter (light source) and the optical transmission path is 1 dB or less.

In an actual optical transmission system, an optical transmission path is formed by connecting two or more optical fibers to transmit an optical signal in many cases. When optical fibers are connected to each other, a gap (air layer) between the fibers causes an increase in reflection loss and reflection return light noise. Thus, it is important to reduce reflection at the fiber connection part for high-quality optical transmission.

Various methods of reducing reflection at a fiber connection part have been proposed, for example, fusion splicing, connection using a refractive index matching agent, and the like, but physical contact (PC) connection is most widely used. In a PC connection, fiber end faces (connector end faces) polished into a convex spherical shape are pressed against each other and brought into close contact with each other, thereby preventing occurrence of reflection.

However, in order to perform a PC connection, not only precise polishing processing of the end face of the connector is required, but also strong fitting force is required at the time of connection. Thus, deterioration of workability and an increase in cost due to robustness of the connector may become problems. Further, in the PC connection, since the fiber end faces are brought into physical contact with each other, when fitting is performed in a state where a foreign substance is present on the fiber end faces, the foreign substance may be pressed against the fiber end faces and damage the end faces.

Thus, when it is possible to establish an optical transmission technology that enables high-quality signal transmission regardless of the presence or absence of reflection at the fiber connection part, a related-art fitting technique for reducing reflection at the fiber connection part represented by PC connection becomes unnecessary, and optical fiber connection can be extremely simplified.

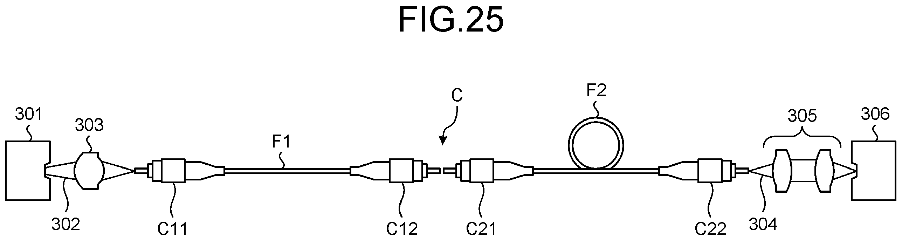

FIG. 25 is a schematic diagram of an experimental system for examining an influence of an inter-fiber gap. The inventors of the present invention evaluated the influence of reflection generated at the optical fiber connection part on the transmission quality using the experimental system illustrated in FIG. 25. In the experimental system illustrated in FIG. 25, a connector C12 of an optical fiber F1 having a length of 1 m provided with a connector C11 and the connector C12 and a connector C21 of an optical fiber F2 having a length of 10 m provided with the connector C21 and a connector C22 are connected by an optical fiber connection part C to form an optical transmission path. Then, an optical signal 302 from a light source 301 was condensed on the end face of the connector C11 by a lens 303 and transmitted through the optical transmission path. Then, an optical signal 304 emitted from the connector C22 was condensed by a lens system 305, received by an optical receiver 306 which is a PD, and BER was measured. At this time, BER in a case where a void (air layer) of 50 um was present in the optical fiber connection part C and BER in a case where a void was not present (that is, when the optical fibers F1 and F2 (between connectors C12 and C21) are pressed against each other and connected to each other) were compared and evaluated. At this time, the two optical fibers F1 and F2 were precisely aligned, and the measurement was performed after eliminating axial shift in the radial direction and the angular direction. The optical signal is a 10 Gbps NRZ signal, the pattern length of the PRBS was 2³¹-1, and the measurement time of the BER was 5 minutes. The light source 301 was a VCSEL having a wavelength of 850 nm, the bias current was 5 mA, and the excitation condition was center excitation.

In this experimental system, in addition to the reflection generated at the optical fiber connection part C, the transmission quality may be degraded by the reflected return light generated at the end face on the light emitting side of the optical fiber F2 on the side of the optical receiver 306. Thus, in this measurement, in order to focus on the influence of the reflection generated in the optical fiber connection part C, the end face on the light emitting side of the optical fiber F2 on the side of the optical receiver 306 (the end surface of the connector C22) was subjected to an oblique polishing of 12 degrees. As a result, the light reflected by the end face of the connector C22 is radiated to the outside of the core of the optical fiber F2, and the influence of the reflected return light generated at the end face of the connector C22 can be removed. The other optical fiber end faces (end faces of the connectors C11, C12, and C21) are subjected to convex spherical polishing.

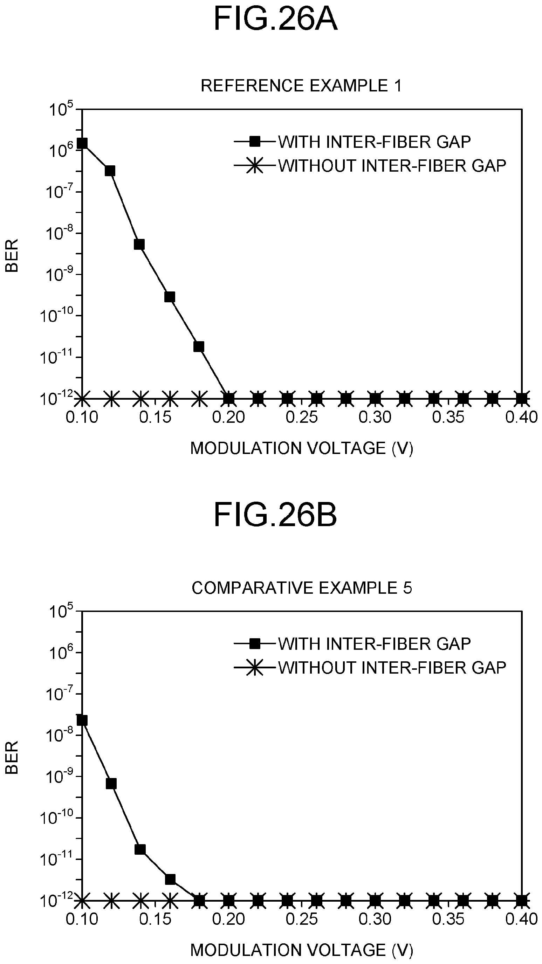

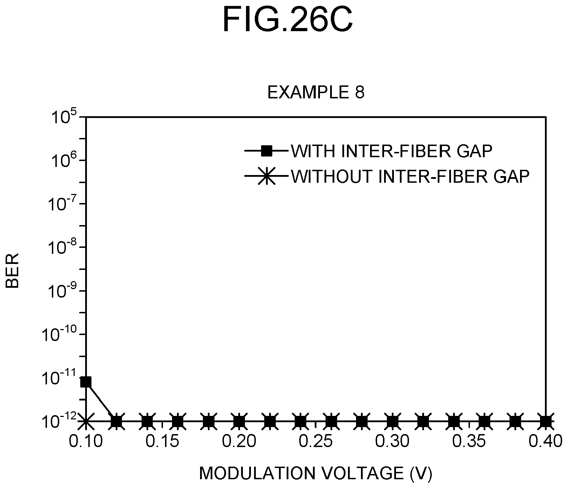

FIGS. 26A, 26B, and 26C are diagrams illustrating a relationship between a modulation voltage and an error rate (worst value) in a case where the optical fibers F1 and F2 are each the optical transmission path of Reference Example 1, in a case where the optical fibers F1 and F2 are each the optical transmission path of Comparative Example 5, and in a case where the optical fibers F1 and F2 are each the optical transmission path of Example 8, respectively. As illustrated in FIGS. 26A, 26B, and 26C, in all of Reference Example 1, Comparative Example 5, and Example 8, when there was no gap in the optical fiber connection part C, error-free transmission with a BER of 10⁻¹² or less was obtained regardless of the modulation voltage.

However, when there was a gap in the optical fiber connection part C, the worst value of BER degrades to about 10⁻⁶ at maximum in Reference Example 1, and the worst value of BER degraded to about 10⁻⁸ at maximum in Comparative Example 5. This is considered to be because reflected return light is generated due to the presence of a gap in the optical fiber connection part C, and noise is increased.

On the other hand, in Example 8, slight BER degradation was observed when the modulation voltage was 0.1 V, but when the modulation voltage was 0.12 V or more, error-free transmission (BER ≤ 10⁻¹²) was achieved under all the measured conditions. The above results indicate that the use of the optical transmission path (POF) of Example 8 enables low noise signal transmission regardless of the presence or absence of reflection at the optical fiber connection part C, eliminates the need for a related-art fitting technique for reducing reflection at the optical fiber connection part C in PC connection or the like, and enables high-quality optical transmission with extremely simple optical fiber connection.

A case where the optical fibers F1 and F2 are each the optical transmission path of Example 8 is an example of a case where the optical transmission path is configured by connecting two or more optical transmission paths, an example of a case where the optical transmission paths are connected via an air layer, and an example of a case in which when a Gaussian beam emitted from a single-mode optical fiber is input by center excitation, at least an optical transmission path disposed immediately after the light source among the optical transmission paths to be connected outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less. When there are a plurality of connection points between the optical transmission paths, the optical transmission paths may be connected to each other via an air layer at least at one of the connection points. Further, when there are a plurality of connection points between the optical transmission paths, the optical transmission paths may be connected to each other via an air layer at all of the connection points.

A case where the optical fibers F1 and F2 are the optical transmission paths of Example 8 is also an example of a case where the optical transmission paths are configured by connecting two or more optical transmission paths, an example of a case where the optical transmission paths are connected via an air layer, and an example in which when a Gaussian beam emitted from a single-mode optical fiber is input by center excitation, each optical transmission path outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less. When there are a plurality of connection points between the optical transmission paths, the optical transmission paths may be connected to each other via an air layer at least at one of the connection points. Further, when there are a plurality of connection points between the optical transmission paths, the optical transmission paths may be connected to each other via an air layer at all of the connection points.

In the above embodiment, the first optical transmission path, the second optical transmission path, and the optical transmission path are all optical fibers, but the first optical transmission path, the second optical transmission path, and the optical transmission path are not limited thereto, and they may be an optical waveguide or a collectively molded multi-optical transmission sheet as disclosed in WO 2019/177068.

The second optical transmission path is not limited to a path longer than the first optical transmission path. That is, the length of the second optical transmission path may be equal to or less than the length of the first optical transmission path.

The optical transmission path of the present disclosure can also constitute a photoelectric composite cable combined with a power supply or a metal cable that transmits a low-speed signal. A signal of an existing standard (for example, HDMI (registered trademark), USB, and the like) can be combined with an optical system to increase the speed, or can be used for a transmission path between new devices. The shape of the photoelectric composite connector may be backward compatible with existing standards or may be a new shape.

The optical transmission system of the present disclosure may be configured as a wavelength division multiplexing (WDM) system in which a plurality of LDs having different wavelengths are used, the number of optical transmission paths is not increased, and the speed can be increased by a multiple of the number of wavelengths used. In this case, emitted light (optical signal) of the LDs having different wavelengths (wavelengths: λ1 to λn) is coupled to the first optical transmission path in the first embodiment or the optical transmission path in the second embodiment using a multiplexer and transmitted. The optical signal transmitted via the optical transmission path is demultiplexed into optical signals of respective wavelengths by the demultiplexer and received by the PD. LDs having different wavelengths, a multiplexer, a demultiplexer, and a PD may form one set and correspond to a plurality of optical transmission paths.

The present invention is not limited by the above embodiments. The present invention also includes a configuration in which the above-described components are appropriately combined. Further, effects and modifications can be easily derived by those skilled in the art. Thus, a wider aspect of the present invention is not limited to the above embodiment, and various modifications are possible.

### Reference Signs List

10, 20 OPTICAL SIGNAL TRANSCEIVER
11, 21 TRANSCEIVER
11a, 21a LD
11b, 21b PD
11c, 21c DRIVER-IC
11d, 21d TIA-IC
12, 22 FIRST OPTICAL TRANSMISSION PATH
13, 23 IN-DEVICE OPTICAL TRANSMISSION PATH
14, 15, 24, 25, C11, C12, C21, C22 CONNECTOR
31, 32 SECOND OPTICAL TRANSMISSION PATH
40, 50 SIGNAL PROCESSING CIRCUIT
61, 62, 61A, 62A OPTICAL TRANSMISSION PATH
100, 100A OPTICAL TRANSMISSION SYSTEM
201 DBR LASER
202 POLARIZATION-MAINTAINING SINGLE-MODE OPTICAL FIBER
203 EMITTED LIGHT
204, 303 LENS
205 OPTICAL TRANSMISSION PATH
206 CCD CAMERA
207 LIGHT
208 NFP MEASURING DEVICE
301 LIGHT SOURCE
302, 304 OPTICAL SIGNAL
305 LENS SYSTEM
306 OPTICAL RECEIVER
C OPTICAL FIBER CONNECTION PART
F1, F2 OPTICAL FIBER

## Claims

1. An optical transmission system comprising:
an optical signal transmitter that transmits an optical signal output from a light source;
an optical signal receiver that receives the optical signal; and
an optical transmission path that optically connects the optical signal transmitter and the optical signal receiver and transmits the optical signal,
wherein
a first optical transmission path is disposed immediately after the light source and further, optically connected to a second optical transmission path, the first optical transmission path having a product of a scattering loss with respect to the optical signal and a length of 6 dB or less, and when a Gaussian beam emitted from a single-mode optical fiber is input by center excitation, the first optical transmission path outputting the Gaussian beam with a beam diameter being enlarged by three times or more.

2. An optical transmission system comprising:
an optical signal transmitter that transmits an optical signal output from a light source;
an optical signal receiver that receives the optical signal; and
an optical transmission path that optically connects the optical signal transmitter and the optical signal receiver and transmits the optical signal,
wherein
a first optical transmission path is disposed immediately after the light source and further, optically connected to a second optical transmission path longer than the first optical transmission path, the first optical transmission path having a product of a scattering loss with respect to the optical signal and a length of 6 dB or less, and when a Gaussian beam emitted from a single-mode optical fiber is input by center excitation, the first optical transmission path outputting the Gaussian beam with a beam diameter being enlarged by three times or more.

3. An optical transmission system comprising:
an optical signal transmitter that outputs an optical signal;
an optical signal receiver that receives the optical signal; and
an optical transmission path that optically connects the optical signal transmitter and the optical signal receiver and transmits the optical signal,
wherein
the optical transmission path includes: a first optical transmission path that has a product of a scattering loss with respect to the optical signal and a length of 6 dB or less and outputs a Gaussian beam with a beam diameter being enlarged by three times or more when the Gaussian beam emitted from a single-mode optical fiber is input by center excitation; and a second optical transmission path that is optically connected to the first optical transmission path, is longer than the first optical transmission path, has a transmission loss of 100 dB/km or less with respect to the optical signal, and outputs a Gaussian beam with a beam diameter being enlarged by less than three times when the Gaussian beam emitted from a single-mode optical fiber is input by center excitation.

4. The optical transmission system according to any one of claims 1 to 3, wherein
the first optical transmission path has a scattering loss with respect to the optical signal of 100 dB/km or more.

5. The optical transmission system according to any one of claims 1 to 4, wherein
signal degradation is suppressed as compared with a case where the optical transmission path includes only the second optical transmission path as an optical transmission path.

6. The optical transmission system according to any one of claims 1 to 5, wherein
the first optical transmission path enlarges the beam diameter of the input Gaussian beam by six times or more and outputs the Gaussian beam.

7. The optical transmission system according to any one of claims 1 to 6, wherein
the first optical transmission path has a scattering loss with respect to the optical signal of 500 dB/km or more.

8. The optical transmission system according to any one of claims 1 to 7, wherein
a modulation method of the optical signal is a digital modulation method, and a baud rate of the optical signal is 10 Gbaud or more.

9. The optical transmission system according to any one of claims 1 to 8, wherein
a modulation method of the optical signal is a digital modulation method, and a baud rate of the optical signal is 25 Gbaud or more.

10. The optical transmission system according to any one of claims 1 to 9, wherein
the first optical transmission path includes plastic.

11. The optical transmission system according to any one of claims 1 to 10, wherein
the second optical transmission path includes plastic or glass.

12. The optical transmission system according to any one of claims 1 to 11, wherein
a modulation method of the optical signal is a digital modulation method, and an error rate of 10⁻¹² or less is realized without using an error correction method.

13. The optical transmission system according to any one of claims 1 to 12, wherein
a modulation method of the optical signal is a digital modulation method and a multi-level modulation method.

14. The optical transmission system according to claim 13, wherein
a modulation method of the optical signal is PAM4.

15. The optical transmission system according to any one of claims 1 to 14, wherein
the first optical transmission path and the second optical transmission path are connected via an air layer.

16. An optical transmission system comprising:
an optical signal transmitter that outputs an optical signal;
an optical signal receiver that receives the optical signal; and
an optical transmission path that optically connects the optical signal transmitter and the optical signal receiver and transmits the optical signal,
wherein
the optical transmission path has a product of a scattering loss with respect to the optical signal and a length of 6 dB or less and outputs a Gaussian beam with a beam diameter being enlarged by three times or more when the Gaussian beam is emitted from a single-mode optical fiber and input by center excitation,
a modulation method of the optical signal is a multi-level modulation method, and
an error rate of 10⁻¹² or less is realized without using an error correction method.

17. An optical transmission system comprising:
an optical signal transmitter that outputs an optical signal;
an optical signal receiver that receives the optical signal; and
an optical transmission path that optically connects the optical signal transmitter and the optical signal receiver and transmits the optical signal,
wherein
in the optical transmission path, a ratio of a minimum value to a maximum value of a beam diameter of a beam to be output is 0.7 or more when a Gaussian beam emitted from a single-mode optical fiber is input with a position of the Gaussian beam being shifted.

18. The optical transmission system according to claim 17, wherein
the optical transmission path has a product of a scattering loss with respect to the optical signal and a length of 6 dB or less.

19. The optical transmission system according to claim 17 or 18, wherein
a modulation method of the optical signal is a digital modulation method that is a binary modulation method or a multi-level modulation method, and a worst value of an error rate is 10⁻⁸ or less under an optical coupling condition under which a coupling loss between the optical signal transmitter and the optical transmission path is 1 dB or less.

20. The optical transmission system according to claim 17 or 18, wherein
a modulation method of the optical signal is a digital modulation method that is a binary modulation method or a multi-level modulation method, and an error rate of 10⁻¹² or less is realized regardless of a positional shift amount under an optical coupling condition under which a coupling loss between the optical signal transmitter and the optical transmission path is 1 dB or less.

21. An optical transmission system comprising:
an optical signal transmitter that transmits an optical signal output from a light source;
an optical signal receiver that receives the optical signal; and
an optical transmission path that optically connects the optical signal transmitter and the optical signal receiver and transmits the optical signal,
wherein
the optical transmission path is configured by connecting two or more optical transmission paths,
the optical transmission paths are connected to each other via an air layer in at least one of connection points, and
when a Gaussian beam emitted from a single-mode optical fiber is input by center excitation, at least an optical transmission path disposed immediately after the light source among the optical transmission paths to be connected outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less.

22. An optical transmission system comprising:
an optical signal transmitter that outputs an optical signal;
an optical signal receiver that receives the optical signal; and
an optical transmission path that optically connects the optical signal transmitter and the optical signal receiver and transmits the optical signal,
wherein
the optical transmission path is configured by connecting two or more optical transmission paths,
the optical transmission paths are connected to each other via an air layer in at least one of connection points, and
when a Gaussian beam emitted from a single-mode optical fiber is input by center excitation, each optical transmission path outputs the Gaussian beam with a beam diameter being enlarged by three times or more, and when the Gaussian beam emitted from the single-mode optical fiber is input with a position of the Gaussian beam being shifted, a ratio of a minimum value to a maximum value of the beam diameter of the beam to be output is 0.7 or more, and a product of a scattering loss with respect to the optical signal and a length is 6 dB or less.

23. The optical transmission system according to claim 21 or 22, wherein
a modulation method of the optical signal is a digital modulation method that is a binary modulation method or a multi-level modulation method, and an error rate is 10⁻⁸ or less when the optical signal is centrally excited.

24. The optical transmission system according to claim 21 or 22, wherein
a modulation method of the optical signal is a digital modulation method that is a binary modulation method or a multi-level modulation method, and an error rate of 10⁻¹² or less is realized when the optical signal is centrally excited.

25. The optical transmission system according to any one of claims 1 to 24, the optical transmission system being a wavelength division multiplexing (WDM) system.

26. A photoelectric composite cable comprising the optical transmission system according to any one of claims 1 to 25.

27. An optical transmission path used for an optical signal transmitter that outputs an optical signal having a baud rate of 10 Gbaud or more, wherein a product of a scattering loss with respect to the optical signal and a length is 6 dB or less, and when a Gaussian beam emitted from a single-mode optical fiber is input by center excitation, the optical transmission path outputs the Gaussian beam with a beam diameter being enlarged by three times or more.

28. The optical transmission path according to claim 27, having a scattering loss with respect to the optical signal of 50 dB/km or more.

29. The optical transmission path according to claim 27 or 28, having a length of less than 10 m.
